# EUROPEAN PATENT APPLICATION

(11) **EP 4 836 577 A1**
(43) Date of publication of application: **04.11.2026**
(21) Application number: 23962857.1
(22) Date of filing: 29.12.2023
(51) Int. Cl.: H04W 74/0833

(54) **METHOD AND APPARATUS FOR NODE FOR WIRELESS COMMUNICATION**

(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/143479
(87) International publication number: WO 2025/138183

(57) **Abstract**

The present application provides a method for a node used for wireless communication and an apparatus, which helps indicate, by using a PRACH mask index, a PRACH transmission with a plurality of preamble repetitions. The method includes: receiving first signalling, where the first signalling includes a first PRACH mask index; and transmitting a first PRACH transmission on a first RO set, where the first RO set includes Nr ROs, the first PRACH transmission includes Nr preamble repetitions, the Nr ROs in the first RO set are consecutive in time domain, a first SSB index is one of a plurality of SSB indexes, the Nr ROs in the first RO set are associated with the first SSB index, a start RO in the first RO set is related to all of a quantity of the plurality of SSB indexes, the first SSB index, Nr, and the first PRACH mask index, and Nr is a positive integer greater than 1.

## Description

### TECHNICAL FIELD

The present application relates to the field of communications technologies, and more specifically, to a method for a node used for wireless communication and an apparatus.

### BACKGROUND

In order to enhance coverage performance of random access, a physical random access channel (physical random access channel, PRACH) transmission with a plurality of preamble repetitions is planned to be introduced in some communications systems, such as a new radio (new radio, NR) system. In some random access (for example, contention-free random access (contention-free random access, CFRA)) mechanisms, a start PRACH occasion (PRACH occasion, RO) is generally determined, based on a PRACH mask index (PRACH mask index), from a PRACH occasion set (PRACH occasion set, ROSet, also referred to as an RO set) occupied by a plurality of preamble repetitions, so as to determine the PRACH occasion set.

However, the PRACH mask index may not indicate all RO sets. In addition, the RO set indicated by the PRACH mask index may conflict with a PRACH transmission in another random access mechanism. Therefore, how to effectively indicate the RO set by using the PRACH mask index is an urgent problem to be solved.

### SUMMARY

The present application provides a method for a node used for wireless communication and an apparatus. Various aspects involved in the present application are described below.

According to a first aspect, a method for a first node used for wireless communication is provided. The method includes: receiving first signalling, where the first signalling includes a first PRACH mask index; and transmitting a first PRACH transmission on a first RO set, where the first RO set includes Nr ROs, the first PRACH transmission includes Nr preamble repetitions, the Nr ROs in the first RO set are consecutive in time domain, a first SSB index is one of a plurality of SSB indexes, the Nr ROs in the first RO set are associated with the first SSB index, a start RO in the first RO set is related to all of a quantity of the plurality of SSB indexes, the first SSB index, Nr, and the first PRACH mask index, and Nr is a positive integer greater than 1.

According to a second aspect, a method for a second node used for wireless communication is provided. The method includes: transmitting first signalling, where the first signalling includes a first PRACH mask index; and receiving a first PRACH transmission on a first RO set, where the first RO set includes Nr ROs, the first PRACH transmission includes Nr preamble repetitions, the Nr ROs in the first RO set are consecutive in time domain, a first SSB index is one of a plurality of SSB indexes, the Nr ROs in the first RO set are associated with the first SSB index, a start RO in the first RO set is related to all of a quantity of the plurality of SSB indexes, the first SSB index, Nr, and the first PRACH mask index, and Nr is a positive integer greater than 1.

According to a third aspect, a first node used for wireless communication is provided. The first node includes: a first transceiver, receiving first signalling, where the first signalling includes a first PRACH mask index; and the first transceiver is further configured to transmit a first PRACH transmission on a first RO set, where the first RO set includes Nr ROs, the first PRACH transmission includes Nr preamble repetitions, the Nr ROs in the first RO set are consecutive in time domain, a first SSB index is one of a plurality of SSB indexes, the Nr ROs in the first RO set are associated with the first SSB index, a start RO in the first RO set is related to all of a quantity of the plurality of SSB indexes, the first SSB index, Nr, and the first PRACH mask index, and Nr is a positive integer greater than 1.

According to a fourth aspect, a second node used for wireless communication is provided. The second node includes: a second transceiver, transmitting first signalling, where the first signalling includes a first PRACH mask index; and the second transceiver is further configured to receive a first PRACH transmission on a first RO set, where the first RO set includes Nr ROs, the first PRACH transmission includes Nr preamble repetitions, the Nr ROs in the first RO set are consecutive in time domain, a first SSB index is one of a plurality of SSB indexes, the Nr ROs in the first RO set are associated with the first SSB index, a start RO in the first RO set is related to all of a quantity of the plurality of SSB indexes, the first SSB index, Nr, and the first PRACH mask index, and Nr is a positive integer greater than 1.

According to a fifth aspect, a first node used for wireless communication is provided. The first node includes a transceiver, a memory, and a processor, where the memory is configured to store a program, and the processor is configured to invoke the program in the memory and control the transceiver to receive or transmit a signal to cause the first node to perform the method according to the first aspect.

According to a sixth aspect, a second node used for wireless communication is provided. The second node includes a transceiver, a memory, and a processor, where the memory is configured to store a program, and the processor is configured to invoke the program in the memory and control the transceiver to receive or transmit a signal to cause the second node to perform the method according to the second aspect.

According to a seventh aspect, an embodiment of the present application provides a communications system, and the system includes the first node and/or the second node described above. In another possible design, the system may further include another device interacting with the first node or the second node in the solution provided in the embodiments of the present application.

According to an eighth aspect, an embodiment of the present application provides a computer-readable storage medium. The computer-readable storage medium stores a computer program, and the computer program causes a computer to perform some or all of the steps in the method according to the foregoing aspects.

According to a ninth aspect, an embodiment of the present application provides a computer program product. The computer program product includes a non-transitory computer-readable storage medium storing a computer program, and the computer program is operable to cause a computer to perform some or all of the steps of the method according to the foregoing aspects. In some implementations, the computer program product may be a software installation package.

According to a tenth aspect, an embodiment of the present application provides a chip. The chip includes a memory and a processor, and the processor may invoke a computer program from the memory and run the computer program, to implement some or all of the steps of the method according to the foregoing aspects.

In embodiments of the present application, after receiving the first PRACH mask index, the first node transmits the first PRACH transmission on the first RO set. The start RO in the first RO set is related to various types of information, which may reduce or avoid a conflict with a PRACH transmission in a contention-based random access (contention-based random access, CBRA) mechanism.

In embodiments of the present application, the first node determines the start RO in the first RO set based on the first PRACH mask index, the quantity of the plurality of SSB indexes, the first SSB index, and a quantity of the preamble repetitions in the first PRACH transmission, so that flexibility of the PRACH mask index indicating the RO set is increased.

In embodiments of the present application, the first PRACH transmission transmitted by the first node on the first RO set includes Nr preamble repetitions. Nr is a positive integer greater than 1. It may be learned that the first node may optimize resource allocation for a PRACH transmission with a plurality of preamble repetitions.

In embodiments of the present application, the first RO set in which the start RO determined by the first node is located is used to transmit the first PRACH transmission with the plurality of preamble repetitions, which not only helps improve a performance gain of the PRACH transmission, and increase a coverage range, but also helps reduce a random access delay, and improve efficiency of random access resource utilization.

### BRIEF DESCRIPTION OF THE DRAWINGS

FIG. 1 is an example diagram of a system architecture of a wireless communications system to which an embodiment of the present application is applicable.
FIG. 2 is a schematic diagram of an implementation of determining a start RO in an RO set based on a PRACH mask index.
FIG. 3 is a schematic diagram of another implementation of determining a start RO in an RO set based on a PRACH mask index.
FIG. 4 is a schematic flowchart of a method for a first node used for wireless communication according to an embodiment of the present application.
FIG. 5 is a schematic diagram of several possible preamble formats corresponding to preamble repetitions in the method shown in FIG. 4.
FIG. 6 is a schematic diagram of a possible implementation of the method shown in FIG. 4.
FIG. 7 is a schematic flowchart of a possible implementation of the method shown in FIG. 4.
FIG. 8 is a schematic structural diagram of a first node used for wireless communication according to an embodiment of the present application.
FIG. 9 is a schematic structural diagram of a second node used for wireless communication according to an embodiment of the present application.
FIG. 10 is a schematic structural diagram of an apparatus according to an embodiment of the present application.
FIG. 11 is a schematic diagram of a hardware module of a communications device according to an embodiment of the present application.

### DETAILED DESCRIPTION OF THE EMBODIMENTS

### Communications system architecture

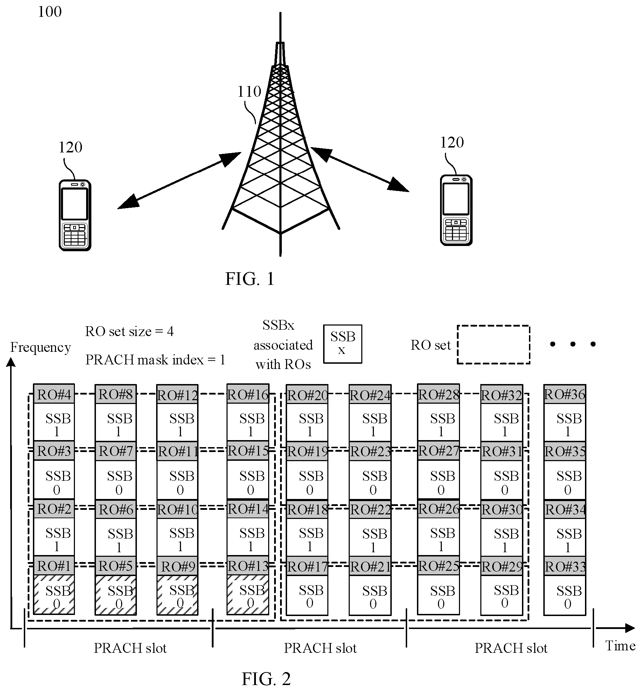

FIG. 1 is an example diagram of a system architecture of a wireless communications system 100 to which an embodiment of the present application is applicable. The wireless communications system 100 may include a network device 110 and a user equipment (user equipment, UE) 120. The network device 110 may be a device in communication with the user equipment 120. The network device 110 may provide communication coverage for a specific geographic area, and may communicate with the user equipment 120 located within the coverage.

FIG. 1 exemplarily shows one network device and two user equipments. Optionally, the wireless communications system 100 may include a plurality of network devices, and another quantity of user equipments may be included in coverage of each network device, which is not limited in the embodiments of the present application.

Optionally, the wireless communications system 100 may further include other network entities such as a network controller and a mobility management entity, which is not limited in the embodiments of the present application.

It should be understood that the technical solutions of embodiments of the present application may be applied to various communications systems, for example, a fifth generation (5th generation, 5G) system or an NR system, a long term evolution (long term evolution, LTE) system, an LTE frequency division duplex (frequency division duplex, FDD) system, and an LTE time division duplex (time division duplex, TDD) system. The technical solutions provided in the present application may further be applied to a future communications system, such as a sixth generation mobile communications system or a satellite communications system.

The user equipment in embodiments of the present application may also be referred to as a terminal device, an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The user equipment in embodiments of the present application may be a device providing a user with voice and/or data connectivity and capable of connecting people, objects, and machines, such as a handheld device or vehicle-mounted device having a wireless connection function. The user equipment in embodiments of the present application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Optionally, the UE may be used to function as a base station. For example, the UE may act as a scheduling entity, which provides a sidelink signal between UEs in V2X, D2D, or the like. For example, a cellular phone and a vehicle communicate with each other by using a sidelink signal. A cellular phone and a smart home device communicate with each other, without relaying a communication signal by using a base station.

The network device in embodiments of the present application may be a device for communicating with the user equipment. The network device may also be referred to as an access network device or a wireless access network device. For example, the network device may be a base station. The network device in embodiments of the present application may be a radio access network (radio access network, RAN) node (or device) that connects the user equipment to a wireless network. The base station may broadly cover following various names, or may be replaced with following names, such as a NodeB (NodeB), an evolved NodeB (evolved NodeB, eNB), a next generation NodeB (next generation NodeB, gNB), a relay station, an access point, a transmitting and receiving node (transmitting and receiving point, TRP), a transmitting point (transmitting point, TP), a master eNodeB MeNB, a secondary eNodeB SeNB, a multi-standard radio (MSR) node, a home base station, a network controller, an access node, a radio node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or the apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communication, a network-side device in a 6G network, a device that functions as a base station in a future communications system, or the like. The base station may support networks of a same access technology or different access technologies. A specific technology and specific device form used by the network device are not limited in embodiments of the present application.

The base station may be stationary, or may be mobile. For example, a helicopter or an unmanned aerial vehicle may be configured to serve as a mobile base station, and one or more cells may move according to a location of the mobile base station. In other examples, a helicopter or an unmanned aerial vehicle may be configured to function as a device in communication with another base station.

In some deployments, the network device in embodiments of the present application may be a CU or a DU, or the network device includes a CU and a DU. The gNB may further include an AAU.

The network device and the user equipment may be deployed on land, including being indoors or outdoors, handheld, or in-vehicle, may be deployed on a water surface, or may be deployed on a plane, a balloon, or a satellite in the air. In embodiments of the present application, a scenario where the network device and the user equipment are located is not limited.

It should be understood that all or some of functions of the communications device in the present application may also be implemented by software functions running on hardware, or by virtualization functions instantiated on a platform (for example, a cloud platform).

It should be understood that, for the explanation of the terminology (Terminology) in embodiments of the present application, reference may be made to description protocols TS36 series, TS37 series, and TS38 series of the 3rd Generation Partnership Project (3rd generation partnership project, 3GPP), and reference may also be made to description protocols of the Institute of Electrical and Electronics Engineers (Institute of Electrical and Electronics Engineers, IEEE).

For ease of understanding, some related technical knowledge related to embodiments of the present application is first introduced. The following related technologies, as optional solutions, may be randomly combined with the technical solutions of the embodiments of the present application, all of which fall within the protection scope of the embodiments of the present application. The embodiments of the present application include at least part of the following content.

### Coverage enhancements of PRACH transmissions

Coverage performance of a communications system (for example, an NR system) is an important factor that needs to be considered when an operator performs commercial deployment of a communication network, because the coverage performance of the communications system directly affects service quality (service quality) of the communications system and costs of the operator, for example, capital expenditure (capital expenditure, CAPEX) of the operator and the operating expense (operating expense, OPEX) of the operator.

Coverage performance of a communications system varies depending on different operating frequency bands of the communications system. For example, compared with an LTE system, an NR system may operate in a higher frequency band (for example, a millimeter wave frequency band), which results in a larger path loss of the NR system during operation in a higher frequency band, consequently resulting in poorer coverage performance of the NR system in a higher frequency band. Therefore, as a communications system may support increasingly high frequency bands, how to enhance coverage of the communications system has become a problem to be resolved.

In most scenarios of practical deployment, since a capability of a user equipment is lower than that of a network device, coverage performance of an uplink (uplink, UL) is a bottleneck for enhancing coverage of a communications system. With the development of communication technologies, uplink services in some emerging vertical use cases (emerging vertical use cases) gradually increase. For example, for a video uploading (video uploading) service, in a scenario with many uplink services, how to enhance uplink coverage is a problem that needs to be further resolved.

In the related art, there has been a technical solution of coverage enhancement for some uplinks. For example, a coverage enhancement solution has been introduced for a physical uplink shared channel (physical uplink shared channel, PUSCH), a physical uplink control channel (physical uplink control channel, PUCCH), and a message 3 (message 3, Msg3) in a random access procedure in Release 17 (release 17, Rel-17) of NR.

However, no coverage enhancement solution is designed for a PRACH in the Rel-17, but PRACH transmission performance is very important to many procedures such as an initial access (initial access) procedure and a beam failure recovery (beam failure recovery) procedure, and therefore, it is also very important to perform coverage enhancement on a PRACH. On such a basis, the 3GPP formally establishes, through the proposal of RP-221858, a work item (work item, WI) of "further NR coverage enhancements (further NR coverage enhancements)" in Rel-18 of NR, in which enhancing coverage performance of PRACH transmission is one of the important topics of the work item.

To improve coverage performance of PRACH transmission, a PRACH transmission with a plurality of preamble repetitions (a PRACH transmission with multiple preamble repetitions) is planned to be introduced in Release 18 (release 18, Rel-18) of NR, and may also be referred to as multiple PRACH transmissions (multiple PRACH transmission). In this technical feature, the UE may transmit a PRACH format (PRACH format) with a plurality of preamble repetitions respectively on a plurality of resources by using a same transmitting spatial filter (Tx spatial filter). In other words, the UE may transmit a PRACH format with a plurality of preamble repetitions by using a same transmit beam.

Further, for a PRACH transmission with a plurality of preamble repetitions, one PRACH occasion set (ROSet, RO set) is associated with a same synchronization signal/physical broadcast channel block index (synchronization signal/physical broadcast channel block index, SS/PBCH block index, SSB index). The RO set generally includes a plurality of valid PRACH occasions (PRACH occasions, RACH occasions, ROs). Optionally, the plurality of valid ROs in the RO set are consecutive in terms of time and use a same frequency resource in frequency domain. Optionally, a quantity of valid ROs in the RO set is configured by a higher layer. Optionally, there may be two, four, or eight valid ROs in the RO set.

It should be noted that, in embodiments of the present application, the SSB may represent a synchronization signal/physical broadcast channel block (synchronization signal/physical broadcast channel block, SS/PBCH block), or may represent a synchronization signal block (synchronization signal block), which is not limited herein.

Further, the RO set is configured or determined within a time period (time period) X. In other words, the configured or determined RO set is repeated in the unit of the time period X. Optionally, the time period X may include K SSB-to-RO association pattern periods (SSB-to-RO association pattern periods).

In a possible implementation, if one or more preamble repetitions in a PRACH transmission with a plurality of preamble repetitions are dropped (dropped) due to a resource conflict, the dropped preamble repetitions are no longer delayed for transmission.

It should be noted that the foregoing RO refers to a time-frequency resource that can be used for PRACH preamble transmission. In addition, in an NR system, there is a specific mapping relationship between SSBs and ROs, that is, an SSB-to-RO mapping. The mapping relationship is generally determined by two parameters. For example, one parameter is *msg1-FDM*. The other parameter is *ssb-perRACH-Occasion*, or *ssb-perRACH-OccasionAndCB-PreamblesPerSSB*, or *msgA-SSB-PerRACH-OccasionAndCB-PreamblesPerSSB*.

The parameter *msg1-FDM* may indicate a quantity of frequency division multiplexed (Frequency division multiplexed, FDMed) RO(s) within a same period of time (time instance). The *ssb-perRACH-Occasion* may indicate a quantity of SSBs that are mapped to one RO, or a quantity of SSBs corresponding to each RO. The *ssb-perRACH-OccasionAndCB-PreamblesPerSSB* or the *msgA-SSB-PerRACH-OccasionAndCB-PreamblesPerSSB* may indicate a quantity of SSBs corresponding to each RO and a quantity of preamble indexs, mapped to one SSB, on each RO.

### PRACH mask index

In some communications systems (for example, NR), a physical random access process of a UE may be triggered by a physical downlink control channel (physical downlink control channel, PDCCH) command (order), or may be triggered by a higher layer (higher layers). To reduce or avoid a conflict probability of random access preambles, a gNB/eNB may specify, by configuring a PRACH mask index, a resource for the UE to perform a PRACH transmission.

For example, the PRACH mask index may specify on which RO(s) within a system frame the UE performs the PRACH transmission. In 3GPP TS38.321, these RO(s) may be associated with a specified or selected SSB index, as shown in Table 1. As described above, a PRACH occasion in Table 1 is an RO, and a PRACH occasion index is an RO index.

**Table 1**

| PRACH mask index/ msgA-SSB-SharedRO-MaskIndex | Allowed PRACH occasions for an SSB (Allowed PRACH occasion(s) of SSB) |
|---|---|
| 0 | All (all) |
| 1 | PRACH occasion index 1 |
| 2 | PRACH occasion index 2 |
| 3 | PRACH occasion index 3 |
| 4 | PRACH occasion index 4 |
| 5 | PRACH occasion index 5 |
| 6 | PRACH occasion index 6 |
| 7 | PRACH occasion index 7 |
| 8 | PRACH occasion index 8 |
| 9 | Every even (every even) PRACH occasion |
| 10 | Every odd (every even) PRACH occasion |
| 11 | Reserved (reserved) |
| 12 | Reserved |
| 13 | Reserved |
| 14 | Reserved |
| 15 | Reserved |

In some embodiments, when a PRACH transmission is triggered by a PDCCH order, a downlink control information (downlink control information, DCI) format (format) in the PDCCH is used for indicating the PRACH mask index. For example, a DCI format 1_0 is used for indicating the PRACH mask index and an SSB index associated with the PRACH mask index, as shown in Table 2. In Table 2, a cyclic redundancy check (cyclic redundancy check, CRC) in the DCI format 1_0 is scrambled by a cell radio network temporary identifier (cell radio network temporary identifier, C-RNTI). In addition, the DCI format 1_0 further indicates an identifier for DCI formats (identifier for DCI formats), frequency resource assignment (frequency domain resource assignment), a random access preamble index (random access preamble index), an uplink (uplink, UL) or supplementary uplink (supplementary uplink) indicator (indicator), and a reserved bit.

**Table 2**

| DCI format 1_0 with a CRC being scrambled by a C-RNTI | |
|---|---|
| Field (field) | Value (value) |
| DCI format identifier (1 bit) | 1 |
| Frequency resource assignment | All ones (all ones) |
| Random access preamble index (6 bits) | Not all zeros (not all zeros) |
| UL/SUL indicator (1 bit) | 0/1 |
| SS/PBCH index (6 bits) | One of 0 to 63 |
| PRACH mask index (4 bits) | One of 0 to 10 |
| Reserved bits (12 bits or 10 bits) | Reserved |

In some embodiments, when a PRACH transmission is triggered by a higher layer, the PRACH mask index may be indicated by a radio resource control information element (radio resource control information element, RRC IE). For example, an RRC IE *ra-ssb-OccasionMaskIndex* is used for indicating the PRACH mask index.

In the NR system, ROs are consecutively mapped to each SSB index. Further, within each SSB-to-RO mapping cycle (mapping cycle), order of ROs indicated by the PRACH mask index is reset. For a PRACH transmission, the UE may select, for a specified SSB index within a first available mapping period, an RO indicated by a value of the PRACH mask index in Table 2. For example, in the CFRA mechanism, a start RO in an RO set occupied by a plurality of preamble repetitions is determined based on the PRACH mask index, thereby determining the RO set.

Optionally, the PRACH mask index may indicate an RO(s) for a same SSB.

Optionally, the PRACH mask index is used for indicating a start RO in an RO set corresponding to an SSB index.

As described above, a PRACH transmission with a plurality of preamble repetitions or multiple PRACH transmissions is introduced in NR Rel-18. When performing the PRACH transmission, the UE needs to select an RO set. The RO set includes a plurality of available time division multiplexed ROs (Time division multiplexed, TDMed).

The UE may select, based on the PRACH mask index, an RO set for an SSB index in following two options manners.

In Option 1 (option 1), all RO sets within a time period X are first determined. The determined one or more RO sets are selected for transmitting preamble repetitions. Then, the PRACH mask index is used for indicating a start RO in an RO set. The RO set used for transmitting preamble repetitions may be determined based on the RO set in which the start RO is located. It may be learned that an option manner of grouping first and mask second (grouping first, mask second) is used in Option 1.

The following exemplarily describes the manner in Option 1 in combination with a mapping relationship between SSBs and ROs shown in FIG. 2. In the example of FIG. 2, it is assumed that there are two SSB beams, and SSB indexes corresponding to the two SSB beams are an SSB 0 and an SSB 1.

Referring to FIG. 2, the time period X includes three PRACH slots (slot). A quantity of time division multiplexed ROs in each PRACH slot is 3. In frequency domain, a quantity of frequency division multiplexed ROs is 4. Therefore, in each PRACH slot, there are 12 ROs, each corresponding to the SSB 0 or SSB 1. FIG. 2 shows the SSB index associated with each RO (RO associated with SSBx).

It may be learned from FIG. 2 that an RO set size (ROSet size) is 4. Since four ROs in an RO set are time division multiplexed, a plurality of RO sets within the time period X are shown by dashed boxes in FIG. 2. Each dashed box represents an RO set. It may be learned that, within the time period X, all RO sets have been determined.

Continuing to refer to FIG. 2, a value of the PRACH mask index is 1. It may be learned from indication of the PRACH mask index that a start RO in the RO set is an RO #1. Therefore, the RO set indicated by the PRACH mask index contains four ROs filled with shading, namely an RO #1, an RO #5, an RO #9, and an RO#13.

It may be learned from the foregoing Table 1 that an indication field of the PRACH mask index is limited. Therefore, the PRACH mask index may not be able to individually indicate some RO sets. For example, the indication field of the PRACH mask index cannot indicate an RO set with any one RO in an RO #17 to an RO #20 in FIG. 2 as a start RO. Further, the larger the RO set size, the larger an index of a start RO in an RO set. Therefore, RO sets that can be indicated by the PRACH mask index are more limited.

In Option 2 (option 2), the PRACH mask index indicates an RO(s) for a same SSB. The RO(s) indicated by the PRACH mask index may be selected as a start RO in an RO set, and a subsequent RO(s) following the start RO forms the RO set with the start RO. It may be learned that an option manner of mask first and grouping second (mask first, grouping second) is used in Option 2.

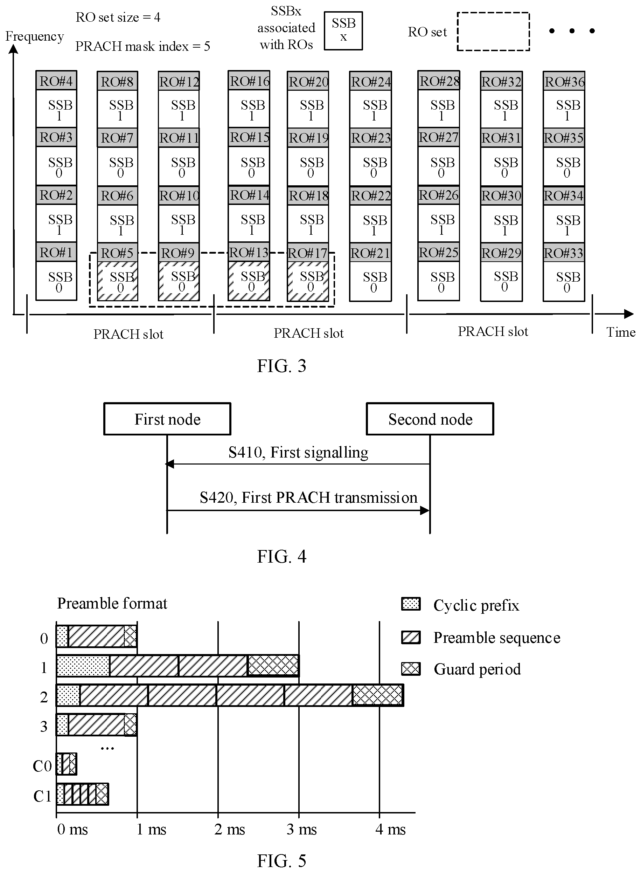

The following exemplarily describes the manner in Option 2 in combination with a mapping relationship between SSBs and ROs shown in FIG. 3. Compared to FIG. 2, SSB indexes in FIG. 3 are still an SSB 0 and an SSB 1, and a quantity of ROs in each PRACH slot is also the same as in FIG. 2.

It may be learned from FIG. 3 that a value of the PRACH mask index is 5. It may be learned from indication of the PRACH mask index that a start RO in an RO set is an RO #5. Since the RO set size is 4, the RO set determined based on the PRACH mask index is shown by the dashed box in FIG. 3. In other words, the RO set indicated by the PRACH mask index contains four ROs filled with shading, namely an RO #5, an RO #9, an RO #13, and an RO #17.

As shown in FIG. 3, in Option 2, the formation of the RO set has a higher degree of freedom. Although the indication field of the PRACH mask index is limited, the PRACH mask index may indicate a larger quantity of RO sets than Option 1. However, there is not only a PRACH transmission indicated by the PRACH mask index, but also an RO set, not indicated by the PRACH mask index, selected by the UE in the system. It may be learned that when formation of the RO set indicated by the PRACH mask index is too flexible, it may lead to a conflict with a PRACH transmission on an RO set, not indicated by the PRACH mask index, selected by the UE, consequently affecting system performance.

For example, the manner in which the UE performs the selection without indication by the PRACH mask index may be an indication manner in the CBRA mechanism.

In conclusion, after the PRACH transmission with a plurality of preamble repetitions is introduced, using the manner in Option 1 may lead to a limitation of indicated RO sets due to that the indication field of the PRACH mask index is limited, and using the manner in Option 2 may lead to a conflict between the RO set indicated by the PRACH mask index and a PRACH transmission in another mechanism.

Therefore, in the PRACH transmission indicated based on the PRACH mask index, how to indicate an RO set used for the PRACH transmission with a plurality of preamble repetitions is a technical problem that needs to be studied. In particular, in the CFRA mechanism, how to effectively indicate an RO set used for a PRACH transmission with a plurality of preamble repetitions is a technical problem that needs to be urgently resolved.

In addition, how to effectively indicate, by using the PRACH mask index, a time-frequency resource or an RO set for a PRACH transmission with a plurality of preamble repetitions, and how to resolve a problem that the indication field of the PRACH mask index is limited are both technical problems that need to be resolved.

To resolve the foregoing problems, embodiments of the present application provide a method for a node used for wireless communication and an apparatus. In this method, a first node (for example, a UE) transmits a first PRACH transmission with Nr preamble repetitions on a first RO set. The first node may determine an initial RO in the first RO set based on a first PRACH mask index, an SSB-related parameter, and Nr, which helps resolve the problem that the indication field of the PRACH mask index is limited. In addition, Nr is a positive integer greater than 1. The first PRACH transmission transmitted by the first node may reduce a random access delay, and improve utilization efficiency of a random access resource while improving a performance gain of the PRACH transmission and increasing a coverage range.

Embodiments of the present application may be applied to a scenario in which a PRACH transmission with a plurality of preamble repetitions is performed during a first RACH attempt for retransmission. During a plurality of RACH attempts for retransmission, repeated transmissions with a plurality of preamble repetitions may be used in this scenario, to implement coverage enhancement of the PRACH.

In some embodiments, the PRACH transmission with a plurality of preamble repetitions mentioned in embodiments of the present application may refer to multiple PRACH transmissions that use a same beam, so that a plurality of repeated PRACH transmissions are performed on a same beam to obtain a signal-to-noise ratio gain. In some embodiments, the PRACH transmission with a plurality of preamble repetitions mentioned in embodiments of the present application may refer to multiple PRACH transmissions that use different beams, so that a plurality of PRACH repeated transmissions are performed on different beams to obtain a diversity gain.

It should be noted that, the beam (beam) mentioned in embodiments of the present application may include or be replaced with at least one of following: a physical beam (physical beam), a logical beam (logical beam), a spatial filter (spatial filter), a spatial parameter (spatial parameter), a spatial filter (spatial domain filter), a spatial transmission filter (spatial domain transmission filter), a spatial reception filter (spatial domain reception filter), or an antenna port (antenna port).

Embodiments of the present application may be applied to an initial access process or a beam failure recovery process. The initial access process is used as an example. Embodiments of the present application may be applied to a four-step random access procedure (namely, a type-1 random access procedure), or may be applied to a two-step random access procedure (namely, a type-2 random access procedure), which is not limited in embodiments of the present application.

The method embodiments of the present application are described below in detail with reference to the accompanying drawings. FIG. 4 is a schematic flowchart of a method for a first node used for wireless communication according to an embodiment of the present application. As shown in FIG. 4, the method may be used for interaction between the first node and a second node.

In an embodiment, the first node may be a network-controlled repeater (network-controlled repeater, NCR).

In an embodiment, the first node may be a user equipment, for example, the user equipment 120 shown in FIG. 1.

In an embodiment, the first node may be a relay (relay), such as a relay terminal.

In an embodiment, the second node may be a network device, for example, the network device 110 shown in FIG. 1.

The method shown in FIG. 4 includes Step S410 and Step S420. The following describes these steps.

In Step S410, the first node receives first signalling. The first node may receive the first signalling in a plurality of manners.

In some embodiments, the first signalling may be transmitted to the first node by the second node. For example, the second node may transmit the first signalling to the first node by using DCI. For example, the second node may transmit the first signalling by using a PDCCH order.

In an embodiment, the first signalling is DCI.

In an embodiment, the first signalling is a PDCCH order.

In some embodiments, the first signalling may be indicated by higher layer signalling. For example, the higher layer signalling may be signalling from a radio resource control (radio resource control, RRC) layer. For another example, the higher layer signalling may be signalling from a higher layer relative to the physical layer.

In an embodiment, the first signalling is an RRC IE.

In an embodiment, the first signalling is *ra-ssb-OccasionMaskIndex*.

In an embodiment, for a definition of *ra-ssb-OccasionMaskIndex*, reference is made to 3GPP TS38.331.

In an embodiment, the first signalling includes at least one of DCI or an RRC IE.

The first signalling includes the first PRACH mask index. It may be learned from the foregoing description that PRACH represents a physical random access channel, and the first PRACH mask index is a first physical random access channel mask index.

A value corresponding to the first PRACH mask index may be any one of the index values in the foregoing Table 1, or may be any one of index values in an extended Table 1, or may be any one of index values in a newly created PRACH mask index table, which is not limited herein.

In an embodiment, a value of the first PRACH mask index is one of 0 to 15.

In an embodiment, a value of the first PRACH mask index is one of 0 to 10.

In some embodiments, the first PRACH mask index is used to indicate an RO associated with a first SSB. The RO may be used as the start RO in the first RO set that is used to transmit the first PRACH transmission.

In some embodiments, the first signalling may further include other information related to the first PRACH transmission. For example, the first signalling may include parameters indicated by one or more fields in the foregoing Table 2. For example, the first signalling may further include one or more types of information in a PDCCH order. For example, the first signalling may further include a first SSB index, and the following description is given in combination with the first SSB index.

In Step S420, the first node transmits the first PRACH transmission to the second node. It may be learned from the foregoing description that the first PRACH transmission is a first physical random access channel transmission.

The first node may transmit the first PRACH transmission in a random access procedure (random access procedure, also referred to as a random access process), or may transmit the first PRACH transmission in beam management, which is not limited herein.

For example, the random access procedure may be one or more RACH attempts based on the first PRACH transmission performed by the first node.

The first PRACH transmission includes Nr preamble repetitions. Nr is a positive integer greater than 1. It may be learned that the first PRACH transmission is a PRACH transmission with a plurality of preamble repetitions, or may be referred to as multiple PRACH transmissions.

In an embodiment, the first PRACH transmission is configured with Nr preamble repetitions.

In an embodiment, the Nr is configured by a higher layer (higher layer).

In an embodiment, the Nr is independently determined by the first node. In an example, the first node may determine a value of Nr based on a priority of a service. When a priority of a service is relatively high, Nr may be 4 or 8.

In an embodiment, the Nr is a quantity of preamble repetitions included in the first PRACH transmission.

In an embodiment, Nr may be one of 2, 4, or 8.

In an embodiment, any two preamble repetitions in the Nr preamble repetitions may be identical or different.

In some embodiments, any one preamble repetition in the Nr preamble repetitions in the first PRACH transmission may be replaced with one of a preamble, a PRACH preamble, a random access preamble (random access preamble), and a preamble format (preamble format).

In some embodiments, the first node may perform the first PRACH transmission by transmitting Nr preamble repetitions. Transmitting, by the first node, the first PRACH transmission may be replaced with transmitting, by the first node, Nr preamble repetitions or performing transmission of Nr preamble repetitions.

In an embodiment, one or more preamble repetitions in the Nr preamble repetitions may be dropped.

In some embodiments, the Nr preamble repetitions correspond to at least one preamble format. For example, the Nr preamble repetitions included in the first PRACH transmission correspond to a plurality of different preamble formats, respectively. For example, at least two preamble repetitions in the Nr preamble repetitions included in the first PRACH transmission correspond to different preamble formats. In an example, a preamble repetition 1 in the plurality of preamble repetitions uses a preamble format including a plurality of sequences, and a preamble repetition 2 uses a preamble format including one sequence.

In an embodiment, the Nr preamble repetitions correspond to one preamble format.

In an embodiment, any one preamble repetition in the Nr preamble repetitions includes one preamble format.

In an embodiment, any one preamble repetition in the Nr preamble repetitions is a preamble format.

In an embodiment, any two preamble repetitions in the Nr preamble repetitions use a same preamble format.

It should be noted that a preamble format corresponding to any one preamble repetition in the Nr preamble repetitions may be any one of existing preamble formats, or may be any one of future preamble formats, which is not limited herein.

For ease of understanding, the following exemplarily describes, with reference to several preamble formats in FIG. 5, preamble formats that may correspond to the Nr preamble repetitions. FIG. 5 shows only some preamble formats for comparative description. It should be understood that the preamble formats in FIG. 5 are merely examples, and do not limit a plurality of preamble formats corresponding to the Nr preamble repetitions.

The preamble formats shown in FIG. 5 include a format 0 to a format 3, a format C0, and a format C1. It may be learned from FIG. 5 that a plurality of other preamble formats are further included between the format 3 and the format C0. Referring to FIG. 5, a preamble format mainly includes a cyclic prefix (cyclic prefix, CP) at the beginning, a preamble sequence (sequence, SEQ) in the middle, and a guard period (gap, GP) at the end. All preamble formats include one CP and n SEQs, and some preamble formats may not include the GP.

It may be learned from FIG. 5 that a quantity n of SEQs may be 1. For example, for a format 0 and a format C0 in FIG. 5, the quantity n of SEQs is 1. A quantity n of SEQs may alternatively be another integer greater than 1. For example, in FIG. 5, a value of n for the format 1 is 2, and values of n for the format 2, the format 3, and the format C1 are 4.

Still referring to FIG. 5, different preamble formats have different time lengths. For example, time lengths of the format 0 and the format 3 are 1 ms, a time length of the format 1 is 3 ms, a time length of the format 2 is greater than 4 ms, and time lengths of the format C0 and the format C1 are less than 1 ms. Since different preamble formats have different total duration, and the value of n varies for different formats, time lengths of the CP, SEQ, and GP also vary in different formats.

The first node transmits the first PRACH transmission on the first RO set. For the second node, the second node receives the first PRACH transmission on the first RO set. It may be learned from the foregoing description that an RO represents a random access channel occasion (random access channel occasion, RACH occasion) or a PRACH occasion, and the first RO set is a first PRACH occasion set (PRACH occasion set).

In embodiments of the present application, the RO set may include or be replaced with at least one of following: an ROSet, a random access channel occasion group (random access channel occasion group, ROG), a PRACH occasion group (PRACH occasion group), or a PRACH transmission occasion set (PRACH transmission occasion set).

In an embodiment, the first RO set may be replaced with a first ROSet.

In an embodiment, the first RO set may be replaced with a first PRACH occasion group.

In an embodiment, the first RO set may be replaced with a first PRACH transmission occasion set.

The first RO set may include Nr ROs. Nr is as described above, and details are not described herein again. In an embodiment, the Nr is a quantity of ROs in the first RO set.

In embodiments of the present application, the RO may include or be replaced with at least one of following: a PRACH occasion, or a physical random access channel transmission occasion (PRACH transmission occasion).

In an embodiment, the Nr ROs may be replaced with Nr PRACH occasions.

In an embodiment, the Nr ROs may be replaced with Nr PRACH transmission occasions.

In an embodiment, the Nr ROs included in the first RO set are consecutive in time domain.

In an embodiment, the Nr ROs included in the first RO set use a same frequency resource.

In an embodiment, the Nr ROs included in the first RO set are all valid. That an RO is valid means that a time-frequency resource corresponding to the RO may be used for the PRACH transmission.

A time resource corresponding to the first RO set is used to transmit the first PRACH transmission. In some embodiments, the first node may transmit the Nr preamble repetitions in first preamble repetitions by using the Nr ROs in the first RO set. In other words, the Nr preamble repetitions may be respectively carried on the Nr ROs.

In some embodiments, the first RO set may be one of a plurality of RO sets. The plurality of RO sets may be a plurality of RO sets preconfigured within a first period, so as to avoid a conflict with a PRACH transmission in the CBRA mechanism.

In an embodiment, within the time period X, a plurality of RO sets used for the PRACH transmission with a plurality of preamble repetitions may be preconfigured before indication by the PRACH mask index, that is, the first RO set may be determined in the manner in Option 1.

The first node may trigger the first PRACH transmission in a plurality of manners. In other words, the first node may perform transmission of the first PRACH transmission based on a plurality of types of information. For example, the first node may trigger the first PRACH transmission based on first signalling transmitted by the second node. For another example, the first node may trigger the first PRACH transmission according to higher layer signalling.

In an embodiment, the first PRACH transmission is triggered by the first signalling. In other words, after receiving the first signalling, the first node performs transmission of the first PRACH transmission.

In an embodiment, the first PRACH transmission is triggered by first signalling, and the first signalling is a PDCCH order.

In an embodiment, the first signalling is a PDCCH order, and a value of a random access preamble index field included in the first signalling is not 0. The first node may perform transmission of the first PRACH transmission based on the value of the random access preamble index field in the PDCCH order.

In an embodiment, the first PRACH transmission is triggered by a higher layer.

In an embodiment, the first PRACH transmission is triggered by a higher layer, and the first signalling is an RRC IE.

In some embodiments, the first node may transmit the first PRACH transmission after receiving the first SSB. For example, the first node may receive the first SSB transmitted by the second node. The first SSB may be an SSB in a first SSB set transmitted by the second node. The first SSB set includes a plurality of SSBs. The first SSB is one of a plurality of SSBs.

In an embodiment, the first SSB set includes the first SSB.

In an embodiment, the first SSB is selected from the plurality of SSBs.

In an embodiment, that the first SSB is selected from the plurality of SSBs includes that a measurement value of the first SSB is a maximum value among a plurality of measurement values respectively corresponding to the plurality of SSBs included in the first SSB set.

The first node may select an RO or an RO set based on a received SSB. An SSB related to the first RO set is the first SSB.

In an embodiment, the first PRACH transmission is triggered by a higher layer, and the first SSB is selected from the plurality of SSBs.

In an embodiment, the first PRACH transmission is triggered by a higher layer, the first signalling is an RRC IE, and the first SSB is selected from the plurality of SSBs.

In some embodiments, the first node may determine the first SSB by measurement for the plurality of SSBs in the first SSB set. For example, a measurement value of the first SSB is a maximum value among a plurality of measurement values respectively corresponding to the plurality of SSBs included in the first SSB set.

In some embodiments, the foregoing measurement value may be indicated by any one of parameters indicating signal quality. For example, the measurement value may be indicated by a parameter such as reference signal received power (reference signal received power, RSRP), or reference signal received quality (reference signal received quality, RSRQ).

In an embodiment, a measurement value of the first SSB includes an RSRP value.

In an embodiment, a plurality of measurement values respectively corresponding to the plurality of SSBs included in the first SSB set are respectively a plurality of RSRP values.

In an embodiment, a plurality of measurement values respectively corresponding respectively corresponding to the plurality of SSBs included in the first SSB set include a plurality of maximum values, and a measurement value of the first SSB is one of the plurality of maximum values.

In a sub-embodiment of the foregoing embodiment, a measurement value of the first SSB is any one maximum value in the plurality of maximum values.

In a sub-embodiment of the foregoing embodiment, a measurement value of the first SSB is a first maximum value in the plurality of maximum values.

The first SSB set may include N_{SSB} SSBs. For example, the first SSB set in FIG. 2 or FIG. 3 includes two SSBs.

In an embodiment, a quantity of SSBs in the first SSB set is indicated by higher layer signalling.

In an embodiment, a quantity of SSBs in the first SSB set is indicated by an RRC IE.

In an embodiment, a quantity of SSBs in the first SSB set is indicated by *SIB1*, or *ssb-PositionsInBurst* in *ServingCellConfigCommon*.

In an embodiment, a quantity of SSBs in the first SSB set is equal to *SIB1* or a value of *ssb-PositionsInBurst* in *ServingCellConfigCommon*.

In an embodiment, for a definition of *SIB1*, reference is made to 3GPP TS38.331.

In an embodiment, for a definition of *ServingCellConfigCommon*, reference is made to 3GPP TS38.331.

In some embodiments, the first node may select an RO or an RO set based on an index of the first SSB that is received. An SSB index may be used for indicating an SSB. The index of the first SSB is the first SSB index. The plurality of SSBs in the first SSB set correspond to a plurality of SSB indexes. For example, when the first SSB set includes four SSBs, the four SSBs correspond to four SSB indexes, which are an SSB 0 to an SSB 3, respectively.

In an embodiment, the plurality of SSBs in the first SSB set are in a one-to-one correspondence with the plurality of SSB indexes.

In an embodiment, a quantity of SSBs in the first SSB set is equal to a quantity of the plurality of SSB indexes.

In an embodiment, the plurality of SSB indexes are respectively indexes of the plurality of SSBs included in the first SSB set.

In an embodiment, any one SSB index in the plurality of SSB indexes is an index of an SSB, that is in the plurality of SSBs and that corresponds to the any one SSB index, in the plurality of SSBs.

In an embodiment, the first SSB index is one of the plurality of SSB indexes.

In an embodiment, the first SSB index is an index of the first SSB in the plurality of SSBs included in the first SSB set.

In an embodiment, the plurality of SSB indexes include the first SSB index.

The first SSB index may be carried in a plurality of types of information. For example, the index of the first SSB may be indicated by the first signalling.

In an embodiment, the first signalling includes the index of the first SSB.

In an embodiment, the first PRACH transmission is triggered by the first signalling, and the first signalling includes the index of the first SSB.

In an embodiment, the first PRACH transmission is triggered by the first signalling, the first signalling is a PDCCH order, and the first signalling includes the index of the first SSB.

In an embodiment, the first PRACH transmission is triggered by the first signalling, the first signalling is a PDCCH order, a value of a random access preamble index field included in the first signalling is not 0, and the first signalling includes the index of the first SSB.

The first PRACH mask index, the Nr preamble repetitions included in the first PRACH transmission, the plurality of SSB indexes, and the first SSB index are described above with reference to FIG. 5. The start RO in the first RO set is related to all of the four. In other words, the start RO in the first RO set is related to all of the quantity of the plurality of SSB indexes, the first SSB index, Nr, and the first PRACH mask index. When the start RO is related to all of the four, indication of the RO set may avoid a conflict with another PRACH transmission due to being too flexible, and may also avoid a problem that some RO sets cannot be indicated when the determination is only based on the PRACH mask index.

In an embodiment, the start RO in the first RO set is determined based on the quantity of the plurality of SSB indexes, the first SSB index, Nr, and the first PRACH mask index.

In an embodiment, the start RO in the first RO set is related to at least one of the quantity of SSBs in the first SSB set, the index of the first SSB, Nr, or the first PRACH mask index.

In an embodiment, the start RO in the first RO set is related to Nr and the first PRACH mask index.

In an embodiment, the start RO in the first RO set is related to the quantity of SSBs in the first SSB set and the index of the first SSB.

In an embodiment, the start RO in the first RO set is related to the index of the first SSB.

In some embodiments, an index of the start RO in the first RO set is related to all of the quantity of the plurality of SSB indexes, the first SSB index, Nr, and the first PRACH mask index.

In an embodiment, the index of the start RO in the first RO set is an index of the start RO, in the first RO set, in a plurality of ROs.

In an embodiment, the index of the start RO in the first RO set is an index of the start RO, in the first RO set, in a plurality of ROs included within the first period.

In some embodiments, the first period includes a plurality of ROs. The plurality of ROs include the Nr ROs in the first RO set. The index of the start RO in the first RO set is an index of the start RO in the plurality of ROs included within the first period.

In an embodiment, the plurality of ROs correspond to a plurality of RO indexes. A start index in the plurality of RO indexes is also related to the index of the start RO in the first RO set.

In an embodiment, the index of the start RO in the first RO set is determined based on the quantity of the plurality of SSB indexes, the first SSB index, Nr, and the first PRACH mask index.

In an embodiment, the index of the start RO in the first RO set is further determined based on a frequency division multiplexing parameter. The frequency division multiplexing parameter may be first quantity of frequency domain ROs, for example, a quantity of frequency division multiplexed ROs. For example, a quantity of frequency division multiplexed ROs in FIG. 2 or FIG. 3 is 4.

In an embodiment, the quantity of first frequency domain ROs includes *msg1-FDM*.

In an embodiment, for a definition of *msg1-FDM*, reference is made to section 6.3.2 in 3GPP TS38.331.

In an embodiment, the quantity of first frequency domain ROs is used for indicating a quantity of frequency division multiplexed ROs within a period of time.

In an embodiment, the quantity of first frequency domain ROs is one of 1, 2, 4, or 8.

In an embodiment, the quantity of first frequency domain ROs is configured by a higher layer.

In an embodiment, the quantity of first frequency domain ROs is indicated by an RRC IE.

In some embodiments, the index of the start RO in the first RO set is linearly correlated with at least one of the quantity of the plurality of SSB indexes, the first SSB index, Nr, the first PRACH mask index, or the quantity of first frequency domain ROs, so as to more conveniently indicate the first RO set.

In an embodiment, the index of the start RO in the first RO set is linearly correlated with the first SSB index.

In an embodiment, the index of the start RO in the first RO set is linearly correlated with the first PRACH mask index.

In an embodiment, the index of the start RO in the first RO set is linearly correlated with a multiple of the quantity of the plurality of SSB indexes.

In an embodiment, the index of the start RO in the first RO set is linearly correlated with a multiple of the Nr.

In an embodiment, the index of the start RO in the first RO set is linearly correlated with a multiple of a difference between the first PRACH mask index and 1.

In an embodiment, the index of the start RO in the first RO set is linearly correlated with a product of the quantity of the plurality of SSB indexes and Nr.

In an embodiment, the index of the start RO in the first RO set is linearly correlated with a multiple of the product of the quantity of the plurality of SSB indexes and Nr.

In an embodiment, the index of the start RO in the first RO set is linearly correlated with a product of the quantity of the plurality of SSB indexes, Nr, and *msg1-FDM*, or linearly correlated with a multiple of the product.

In an embodiment, the index of the start RO in the first RO set is linearly correlated with a multiple of *msg1-FDM*.

In an embodiment, the index of the start RO in the first RO set is linearly correlated with a product of the quantity of the plurality of SSB indexes, Nr, and a quantity of frequency division multiplexed ROs, or linearly correlated with a multiple of the product.

In an embodiment, the index of the start RO in the first RO set is linearly correlated with a multiple of the quantity of first frequency domain ROs.

In an embodiment, the index of the start RO in the first RO set is related to a start index of the plurality of ROs included within the first period.

In some embodiments, the index of the start RO in the first RO set is determined based on the quantity of the plurality of SSB indexes, the first SSB index, Nr, the first PRACH mask index, and the quantity of first frequency domain ROs.

In an embodiment, the index of the start RO in the first RO set is equal to the first SSB index + (the first PRACH mask index - 1) × the quantity of the plurality of SSB indexes × Nr × the quantity of first frequency domain ROs + 1.

In an embodiment, the index of the start RO in the first RO set is equal to the first SSB index + (the first PRACH mask index - 1) × the quantity of the plurality of SSB indexes × Nr × *msg1-FDM* + 1.

In an embodiment, when a start index of the plurality of ROs included within the first period is 1 and a start index of the plurality of SSBs in the first SSB set is 0, the index of the start RO in the first RO set is equal to the first SSB index + (the first PRACH mask index - 1) × the quantity of the plurality of SSB indexes × Nr × the quantity of first frequency domain ROs + 1.

In an embodiment, when a start index of the plurality of ROs included within the first period is 0 and a start index of the plurality of SSBs in the first SSB set is 0, the index of the start RO in the first RO set is equal to the first SSB index + (the first PRACH mask index - 1) × the quantity of the plurality of SSB indexes × Nr × the quantity of first frequency domain ROs.

In an example, the start index of the plurality of ROs included within the first period is generally 1, the start index of the plurality of SSBs in the first SSB set is generally 0, and the index I_{ROSet1} of the start RO in the first RO set may be expressed as: ${I}_{ROSet 1} = {I}_{SSB 1} + \left({I}_{mask 1}-1\right) \times {N}_{SSB} \times Nr \times {N}_{FDM} + 1 .$

I_{SSB1} represents the first SSB index, Iₘₐₛₖ₁ represents the first PRACH mask index, N_{SSB} represents the quantity of the plurality of SSB indexes (or the quantity of SSBs in the first SSB set), and N_{FDM} represents the quantity of first frequency domain ROs.

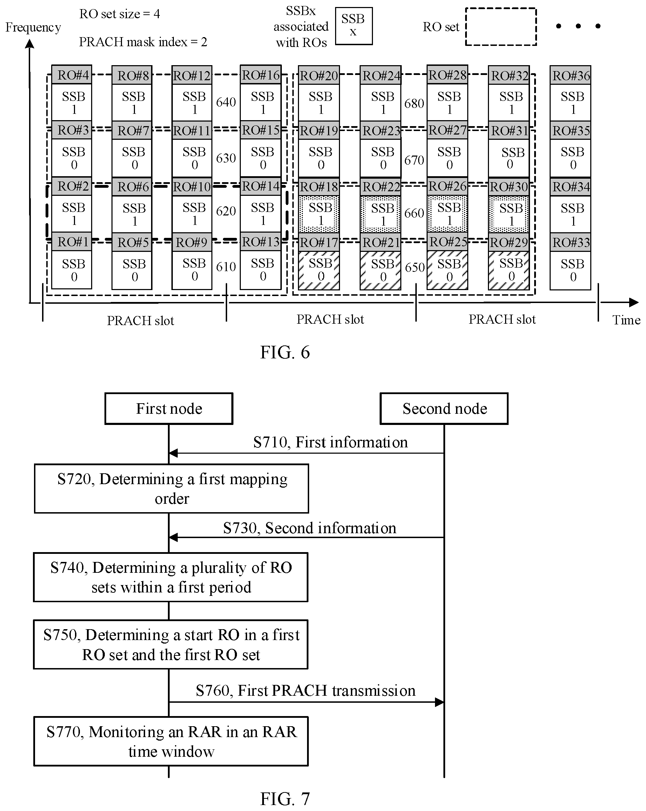

The foregoing describes method embodiments in which the start RO in the first RO set is related to all of the first PRACH mask index, Nr, the quantity of the plurality of SSB indexes, and the first SSB index. Using this method may resolve the problem that the indication field of the PRACH mask index is limited. For ease of understanding, a method for determining the start RO in the first RO set is exemplarily described below with reference to FIG. 6. A quantity of SSBs, a quantity of ROs, and a mapping relationship between SSBs and ROs in FIG. 6 are the same as those in FIG. 2. Details are not described herein again.

As shown in FIG. 6, the quantity (N_{SSB}) of SSBs is 2, a value of Nr is 4, the first PRACH mask index (Iₘₐₛₖ₁) is 2, and the quantity (N_{FDM}) of first frequency domain ROs is 4. Since a start index of the ROs is 1 and a start index of the SSBs is 0, the index of the start RO in the first RO set is determined according to I_{ROSet1} = I_{SSB1} + (Iₘₐₛₖ₁-1) × N_{SSB} × Nr × N_{FDM} + 1.

When the first SSB index (I_{SSB1}) is 0, I_{ROSet1} = 0 + (2-1) × 2 × 4 × 4 + 1 = 17. Referring to FIG. 6, when the first PRACH mask index is 2, the index of the start RO in the first RO set, that is selected for the SSB 0 and used to transmit the first PRACH transmission, is 17. Therefore, the first RO set includes an RO #17, an RO #21, an RO #25, and an RO #29.

When the first SSB index (I_{SSB1}) is 1, I_{ROSet1} = 1 + (2-1) × 2 × 4 × 4 + 1 = 18. Referring to FIG. 6, when the first PRACH mask index is 2, the index of the start RO in the first RO set, that is selected for the SSB 1 and used to transmit the first PRACH transmission, is 18. Therefore, the first RO set includes an RO #18, an RO #22, an RO #26, and an RO #30.

It may be learned from FIG. 6 that when the index of the start RO in the first RO set is determined based on the first PRACH mask index, Nr, the quantity of the plurality of SSB indexes, and the first SSB index, RO sets that may be indicated are not limited by the indication field of the first PRACH mask index.

In some embodiments, the start RO in the first RO set may be used to determine the first RO set that is used for transmitting the first PRACH transmission. For example, when the Nr ROs in the first RO set are consecutive in time domain and use a same frequency resource, one or more ROs after the start RO in the first RO set may be determined based on the start RO, so as to determine the first RO set.

In an embodiment, the start RO in the first RO set is the first RO in the Nr ROs included in the first RO set.

In an embodiment, the start RO in the first RO set is the earliest RO in time domain in the Nr ROs included in the first RO set.

In some embodiments, the first RO set is one of a plurality of RO sets included within the first period. Any one RO set in the plurality of RO sets includes Nr ROs. An index of the first RO set in the plurality of RO sets is related to all of the quantity of the plurality of SSB indexes, the first SSB index, and Nr. The first PRACH mask index indicates the index of the first RO set in the plurality of RO sets. In this method, the quantity of the plurality of SSB indexes, the first SSB index, Nr, and the first PRACH mask index are directly used for determining the first RO set, instead of indicating the first RO set by determining the start RO in the first RO set.

In an embodiment, the quantity of the plurality of SSB indexes and the Nr are used for determining the plurality of RO sets, and the first SSB index and the first PRACH mask index are used for determining the first RO set from the plurality of RO sets.

In an embodiment, the first period includes a plurality of ROs, and some or all of ROs in the plurality of ROs are grouped into a plurality of RO sets based on the quantity of the plurality of SSB indexes and Nr. Any one RO set in the plurality of RO sets corresponds to one SSB in the plurality of SSBs. The first SSB index may be associated with one or more RO sets corresponding to the first SSB. The first RO set used to transmit the first PRACH transmission may be determined based on the first PRACH mask index.

In an embodiment, the quantity of the plurality of SSB indexes and the Nr are used for determining the plurality of RO sets, and the first PRACH mask index is used for indicating the first RO set from RO sets, associated with the first SSB index, in the plurality of RO sets.

In an embodiment, after the plurality of RO sets are determined, the first RO set may be selected, based on the first PRACH mask index, from a plurality of RO sets associated with the first SSB index.

In an embodiment, after the plurality of RO sets are determined, the first PRACH mask index may represent the index of the first RO set in the plurality of RO sets.

In an embodiment, after the plurality of RO sets are determined, the first PRACH mask index may represent an index of the first RO set in a plurality of RO sets associated with an SSB index.

The foregoing describes method embodiments in which the first RO set is related to all of the first PRACH mask index, Nr, the quantity of the plurality of SSB indexes, and the first SSB index. Since the first RO set is determined directly, and Nr and the quantity of the plurality of SSB indexes are considered for determining the plurality of RO sets, a value of the index of the first RO set is much smaller than an index value of the start RO, which also helps resolve the problem that the indication field of the PRACH mask index is limited. For ease of understanding, FIG. 6 is still used as an example for description.

Referring to FIG. 6, in three PRACH slots, eight RO sets are determined based on Nr and the quantity of SSBs. Each dashed box represents an RO set. The eight RO sets are an RO set 610 to an RO set 680, corresponding to indexes 1 to 8, respectively. When the first PRACH mask index is 2, the index of the first RO set is 2. In this scenario, the first RO set may be an RO set 620 indicated by a thick dashed line.

The foregoing introduces, with reference to FIG. 4 to FIG. 6, method embodiments in which the first RO set or the start RO in the first RO set is related to all of the first PRACH mask index, Nr, the quantity of the plurality of SSB indexes, and the first SSB index. This method helps resolve the problem that the indication field of the PRACH mask index is limited. Using this method may further maintain an advantage, in the manner in Option 1, of avoiding a conflict with another PRACH transmission, and may also allow the PRACH mask index to more flexibly indicate RO sets.

However, not all preambles in one RO are necessarily associated with one SSB. In other words, one RO may be associated with a plurality of SSBs. When there are 64 preambles in one RO, after SSBs are mapped to ROs according to an SSB-to-RO mapping relationship, each two successive RO sets may not be calculated from each other by using the foregoing formula or in another manner. For example, a difference between a start RO in a latter RO set and a start RO in a previous RO set is not necessarily linearly correlated with a multiple of the quantity of SSBs or Nr.

To resolve this problem, an embodiment of the present application provides another method for indicating the first RO set. In this method, the first RO set may further be related to a first mapping order, so as to maximize a range of RO sets that can be indicated.

In an embodiment, the first RO set may be related to all of the first mapping order, the quantity of SSBs (the quantity of the plurality of SSB indexes), the first SSB index, Nr, and the first PRACH mask index.

In an embodiment, the first RO set may be related to some or all of the first mapping order, the quantity of SSBs, the first SSB index, Nr, and the first PRACH mask index.

In an embodiment, the start RO in the first RO set is related to a mapping of the plurality of SSB indexes to the plurality of ROs.

In an embodiment, the start RO in the first RO set is related to all of a mapping of the plurality of SSB indexes to the plurality of ROs, Nr, and the first PRACH mask index.

In some embodiments, the first node may first map the plurality of SSB indexes to the plurality of ROs in the first mapping order. The plurality of ROs include the Nr ROs in the first RO set. For example, the plurality of ROs may be some or all of the ROs included within the first period. In other words, the plurality of ROs belong to the first period. For example, the plurality of ROs may be all of the ROs in FIG. 6, that is, an RO #1 to an RO #36. For another example, the plurality of ROs may be some of the ROs in FIG. 6, that is, an RO #1 to an RO #32.

In an embodiment, at least two ROs in the plurality of ROs are frequency division multiplexed (frequency division multiplexing, FDM). For example, an RO #1 and an RO #2 in FIG. 6 are frequency division multiplexed.

In an embodiment, at least two ROs in the plurality of ROs are FDMed.

In an embodiment, at least two ROs in the plurality of ROs are frequency multiplexed PRACH occasions (frequency multiplexed PRACH occasions).

In an embodiment, the plurality of ROs are all time division multiplexed (time division multiplexing, TDM).

In an embodiment, that the plurality of ROs are time division multiplexed may also be expressed as that the plurality of ROs are TDMed.

In an embodiment, the plurality of ROs are time multiplexed PRACH occasions (time multiplexed PRACH occasions).

In an embodiment, at least two ROs in the plurality of ROs are TDMed. An RO #1 and an RO #5 in FIG. 6 are time division multiplexed.

In an embodiment, at least Nr ROs in the plurality of ROs are TDM. For example, four ROs in an RO set are time division multiplexed.

In an embodiment, the plurality of ROs are within at least one PRACH slot.

In an embodiment, the plurality of ROs are within one PRACH slot.

In an embodiment, the plurality of ROs are within a plurality of PRACH slots. In FIG. 6, the plurality of ROs are within three PRACH slots.

In some embodiments, the first period may be used to determine a plurality of ROs associated with the SSBs in the first SSB set. The first period may be the time period X described above, or may be another time period used for indicating a plurality of ROs, which is not limited herein.

In an embodiment, the first period starts from a radio frame 0 (frame 0).

In an embodiment, the first period includes at least one association pattern period (association pattern period).

In an embodiment, the first period includes at least one SSB index-to-RO association pattern period.

In an embodiment, the association pattern period is an SSB index-to-RO association pattern period.

In an embodiment, the association pattern period is an SSB-to-RO association pattern period.

In an embodiment, the association pattern period includes at least one association period (association period).

In an embodiment, the association pattern period includes at least one SSB index-to-RO association period.

In an embodiment, the association period is an SSB index-to-RO association period.

In an embodiment, the association period is an SSB-to-RO association period.

In an embodiment, the first period includes at least one SSB index-to-RO association period.

In an embodiment, the first period includes at least one association period.

In an embodiment, the association period includes at least one mapping cycle (mapping cycle).

In an embodiment, the association period includes at least one SSB index-to-RO mapping period.

In an embodiment, the first period includes at least one SSB index-to-RO mapping period.

In an embodiment, the first period includes at least one mapping period.

In some embodiments, the first mapping order is a mapping relationship that may allow a plurality of SSB indexes to be mapped to a plurality of ROs. The first mapping order may be an existing mapping relationship between SSBs and ROs, or may be an extended mapping relationship between SSBs and ROs, which is not limited herein.

In an embodiment, the first mapping order may be associated with one or more of following: preamble indexes within the first RO set, frequency resources for the plurality of RO sets, and time resources for the plurality of RO sets.

In an embodiment, the first mapping order may include varying order of preamble indexes within one RO set in the plurality of RO sets, such as ascending order of the indexes of the preambles, or descending order of the indexes of the preambles. In other words, the plurality of SSB indexes may be arranged in varying order of preamble indexes within one RO set in the plurality of RO sets.

In an embodiment, the first mapping order may include varying order of frequency resources for the plurality of RO sets, for example, ascending order of the frequency resources, or descending order of the frequency resources. In other words, the plurality of SSB indexes may be ordered according to a varying order of frequency resources for the plurality of frequency division multiplexed RO sets.

In an embodiment, the first mapping order may include varying order of time resources for the plurality of RO sets, for example, ascending order of the time resources, or descending order of the time resources. In other words, the plurality of SSB indexes may be ordered according to a varying order of time resources for the plurality of time division multiplexed RO sets.

In an embodiment, the first mapping order may include one or more of following orders: ascending order of preamble indexes within one RO set in the plurality of RO sets, ascending order of frequency resources for the plurality of RO sets, or ascending order of time resources for the plurality of RO sets.

In an embodiment, the first mapping order may include: first, ascending order of preamble indexes within one RO set in the plurality of RO sets; second, ascending order of frequency resources for the plurality of RO sets; and third, ascending order of time resources for the plurality of RO sets.

It should be understood that the first mapping order may alternatively include a random arrangement and combination of the foregoing several orders, which is not limited herein. For example, the first mapping order may include: first, ascending order of preamble indexes within one RO set in the plurality of RO sets; second, ascending order of time resources for the plurality of RO sets; and third, ascending order of frequency resources for the plurality of RO sets.

The foregoing describes a plurality of manners in which the first RO set is indicated based on the first PRACH mask index and other parameters. The first PRACH mask index may be indicated by the first signalling. An SSB-related parameter is determined by receiving and detecting the first SSB set. The first node is further required to determine Nr, a parameter related to frequency division multiplexing, and the first mapping order. The following describes a method for the first node to determine these parameters.

In some embodiments, the first node may determine, by receiving first information, a parameter for indicating the first RO set. For example, the first node may receive the first information transmitted by the second node.

In an embodiment, the first information may include some parameters for indicating the first RO set.

In an embodiment, the first information may be used to determine some parameters for indicating the first RO set.

In an embodiment, the mapping relationship between SSBs and ROs includes a quantity of SSB indexes associated with one RO and a quantity of preambles corresponding to each SSB index of each RO. In other words, the first information may be used to determine the first mapping order.

In an embodiment, the first information, the first mapping order, and a quantity of the plurality of SSB indexes are used for determining a mapping of the plurality of SSB indexes to the plurality of ROs.

In an embodiment, the first information, the first mapping order, and a quantity of the plurality of SSB indexes are used for determining an association of the plurality of SSB indexes to the plurality of ROs.

In some embodiments, the first information may be used for indicating a quantity of SSB indexes associated with one RO and a quantity of preambles corresponding to each SSB index of each RO. In other words, the first information is used for determining a quantity of SSBs corresponding to each RO and a quantity of contention-based preambles corresponding to each SSB.

In an embodiment, the first information indicates that N SSB indexes are associated with one RO, where N is less than 1, or N is not less than 1.

In an embodiment, the first information indicates that R preambles are associated with each SSB index of each RO, where R is a positive integer. For example, when each RO is associated with a plurality of SSB indexes, each SSB index in the plurality of SSB indexes is associated with R preambles on the RO.

In an embodiment, R is a positive integer not greater than 64. Generally, there are 64 preambles on one RO. Therefore, R is not greater than 64.

In an embodiment, the first information indicates that one SSB index is associated with R preambles on one RO.

In an embodiment, the first information indicates that one SSB index is mapped to R preambles on one RO.

In an embodiment, the first information indicates that N SSB indexes are associated with one RO, and the first information indicates that R preambles are associated with each SSB index of each RO.

In an embodiment, the R preambles are respectively R contention-based preambles (contention based preamble).

In an embodiment, indexes of the R preambles are consecutive.

In an embodiment, the R preambles have consecutive indexes.

In some embodiments, the first information includes sb-perRACH-Occasion, or ssb-perRACH-OccasionAndCB-PreamblesPerSSB, or msgA-SSB-PerRACH-OccasionAndCB-PreamblesPerSSB in 3GPP TS38.331.

In an embodiment, the first information includes an RRC IE.

In an embodiment, the first information is *ssb-perRACH-OccasionAndCB-PreamblesPerSSB*.

In an embodiment, for a definition of *ssb-perRACH-OccasionAndCB-PreamblesPerSSB*, reference is made to 3GPP TS38.331.

In some embodiments, the first information is further used to indicate first quantity of frequency domain ROs, for example, a quantity of frequency division multiplexed ROs.

In an embodiment, the first information indicates a quantity of frequency division multiplexed ROs within a period of time.

In an embodiment, the first information indicates a quantity of frequency division multiplexed ROs in the plurality of ROs.

In an embodiment, the first information includes *msg1-FDM*.

In some embodiments, the first node may determine Nr by receiving second information. For example, the first node receives the first information transmitted by the second node. The first information may include Nr.

In an embodiment, the second information is configured by a higher layer.

In an embodiment, the second information includes an RRC IE.

In an embodiment, the mapping of the plurality of SSB indexes to the plurality of ROs and the Nr are used to determine at least one RO set, and each RO set in the at least one RO set includes Nr ROs.

In an embodiment, the at least one RO set includes the first RO set.

In some embodiments, the first node may determine the plurality of RO sets based on the first mapping order and Nr. Then, the first node may determine the start RO in the first RO set based on the quantity of the plurality of SSB indexes, Nr, the first SSB index, and the first PRACH mask index. Alternatively, the first node may determine the start RO in the first RO set based on the first mapping order, the quantity of the plurality of SSB indexes, Nr, the first SSB index, and the first PRACH mask index. Finally, the first node may determine one or more RO(s) after the start RO in the first RO set based on the first mapping order, so as to determine the first RO set.

In some embodiments, the first node may determine the plurality of RO sets based on the first mapping order, a quantity of the plurality of SSB indexes, and Nr. Then, the first node may directly determine the first RO set based on the first SSB index and the first PRACH mask index.

The following describes embodiments of the present application in more detail with reference to FIG. 7 as a specific example. It should be noted that the examples in FIG. 4 to FIG. 6 are merely intended to help a person skilled in the art understand the embodiments of the present application, and are not intended to limit the embodiments of the present application to a specific value or a specific scenario that is exemplified. Apparently, a person skilled in the art may perform various equivalent modifications or variations based on the examples given in FIG. 4 to FIG. 6, and such modifications or variations also fall within the scope of embodiments of the present application. FIG. 7 is described from a perspective of interaction between the first node and the second node.

Referring to FIG. 7, in Step S710, the first node receives first information transmitted by the second node.

In Step S720, the first node determines the first mapping order. For example, the first node may determine the SSB-to-RO mapping relationship within the time period X based on the first information.

In Step S730, the first node receives the second information transmitted by the second node. The second information may indicate a value of Nr.

In Step S740, the first node determines the plurality of RO sets within the first period. For example, the first node may determine the plurality of RO sets within the time period X based on a parameter of the SSB, an SSB-to-RO mapping relationship, and Nr that are received.

In Step S750, the second node determines the start RO in the first RO set and the first RO set. For example, the first node determines the start RO in the first RO set based on the SSB-to-RO mapping relationship, the quantity of SSBs, the first SSB index, and the first PRACH mask index. Further, the first node determines one or more RO(s) after the start RO in the first RO set based on the SSB-to-RO mapping relationship, so as to determine the first RO set.

In Step S760, the first node transmits the first PRACH transmission to the second node. The first node may perform the first PRACH transmission with a plurality of preamble repetitions on the first RO set.

In Step S770, the first node monitors an RAR in a random access response (random access response, RAR) time window. After receiving an RAR corresponding to the first PRACH transmission, the first node may perform a subsequent random access procedure.

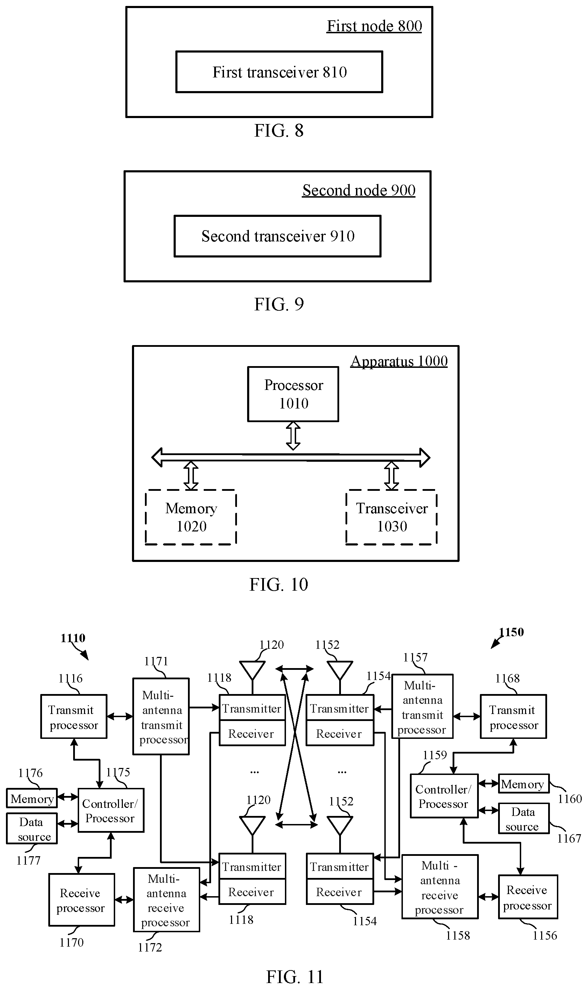

The method embodiments of the present application are described in detail above with reference to FIG. 1 to FIG. 7. Apparatus embodiments of the present application are described in detail below with reference to FIG. 8 to FIG. 11. It should be understood that the description of the method embodiments corresponds to the description of the apparatus embodiments, and therefore, for a part that is not described in detail, reference may be made to the foregoing method embodiments.

FIG. 8 shows a first node used for wireless communication according to an embodiment of the present application. As shown in FIG. 8, the first node 800 includes a first transceiver 810.

The first transceiver 810 may be configured to receive first signalling, where the first signalling includes a first PRACH mask index. The first transceiver 810 is further configured to transmit a first PRACH transmission on a first RO set, where the first RO set includes Nr ROs, the first PRACH transmission includes Nr preamble repetitions, and the Nr ROs in the first RO set are consecutive in time domain. A first SSB index is one of a plurality of SSB indexes. The Nr ROs in the first RO set are associated with the first SSB index. A start RO in the first RO set is related to all of a quantity of the plurality of SSB indexes, the first SSB index, Nr, and the first PRACH mask index. Nr is a positive integer greater than 1.

In an embodiment, the first transceiver 810 is further configured to map the plurality of SSB indexes to a plurality of ROs according to a first mapping order. The plurality of SSB indexes are in a one-to-one correspondence with a plurality of SSBs included in a first SSB set. The plurality of ROs belong to a first period, and the plurality of ROs include the Nr ROs in the first RO set.

In an embodiment, an index of the start RO in the first RO set is related to all of the quantity of the plurality of SSB indexes, the first SSB index, Nr, and the first PRACH mask index.

In an embodiment, an index of the start RO in the first RO set is linearly correlated with a product of the quantity of the plurality of SSB indexes and the Nr.

In an embodiment, an index of the start RO in the first RO set is equal to the first SSB index + (the first PRACH mask index - 1) × the quantity of the plurality of SSB indexes × Nr ×first quantity of frequency domain ROs + 1.

In an embodiment, the first period includes a plurality of ROs. The plurality of ROs included within the first period include the Nr ROs in the first RO set. An index of the start RO in the first RO set is an index of the start RO in the plurality of ROs included within the first period.

In an embodiment, the first period includes a plurality of RO sets, and each RO set in the plurality of RO sets includes Nr ROs. An index of the first RO set in the plurality of RO sets is related to all of the quantity of the plurality of SSB indexes, the first SSB index, and the Nr. The first PRACH mask index indicates the index of the first RO set in the plurality of RO sets.

In an embodiment, the first transceiver 810 is further configured to receive a first SSB. The first SSB is one of a plurality of SSBs included in a first SSB set. A measurement value of the first SSB is a maximum value among a plurality of measurement values respectively corresponding to the plurality of SSBs included in the first SSB set.

In an embodiment, the first transceiver 810 is further configured to receive first information, where the first information is used for indicating a quantity of SSB indexes associated with one RO and a quantity of preambles corresponding to each SSB index of each RO.

In an embodiment, the first transceiver 810 is further configured to receive second information, where the second information includes the Nr, and the Nr is one of 2, 4, or 8.

In an embodiment, the first transceiver 810 may be a transceiver 1030. The first node 800 may further include a processor 1010 and a memory 1020. Details are shown in FIG. 10.

FIG. 9 shows a second node used for wireless communication according to an embodiment of the present application. As shown in FIG. 9, the second node 900 includes a second transceiver 910.

The second transceiver 910 may be configured to transmit first signalling, where the first signalling includes a first PRACH mask index. The second transceiver 910 is further configured to receive a first PRACH transmission on a first RO set, where the first RO set includes Nr ROs, the first PRACH transmission includes Nr preamble repetitions, and the Nr ROs in the first RO set are consecutive in time domain. A first SSB index is one of a plurality of SSB indexes. The Nr ROs in the first RO set are associated with the first SSB index. A start RO in the first RO set is related to all of a quantity of the plurality of SSB indexes, the first SSB index, Nr, and the first PRACH mask index. Nr is a positive integer greater than 1.

In an embodiment, the first mapping order is used for mapping the plurality of SSB indexes to a plurality of ROs. The plurality of SSB indexes are in a one-to-one correspondence with a plurality of SSBs included in a first SSB set. The plurality of ROs belong to a first period, and the plurality of ROs include the Nr ROs in the first RO set.

In an embodiment, an index of the start RO in the first RO set is related to all of the quantity of the plurality of SSB indexes, the first SSB index, Nr, and the first PRACH mask index.

In an embodiment, an index of the start RO in the first RO set is linearly correlated with a product of the quantity of the plurality of SSB indexes and the Nr.

In an embodiment, an index of the start RO in the first RO set is equal to the first SSB index + (the first PRACH mask index - 1) × the quantity of the plurality of SSB indexes × Nr × first quantity of frequency domain ROs + 1.

In an embodiment, the first period includes a plurality of ROs. The plurality of ROs included within the first period include the Nr ROs in the first RO set. An index of the start RO in the first RO set is an index of the start RO in the plurality of ROs included within the first period.

In an embodiment, the first period includes a plurality of RO sets, and each RO set in the plurality of RO sets includes Nr ROs. An index of the first RO set in the plurality of RO sets is related to all of the quantity of the plurality of SSB indexes, the first SSB index, and the Nr. The first PRACH mask index indicates the index of the first RO set in the plurality of RO sets.

In an embodiment, the second transceiver 910 is further configured to transmit a first SSB. The first SSB is one of a plurality of SSBs included in a first SSB set. A measurement value of the first SSB is a maximum value among a plurality of measurement values respectively corresponding to the plurality of SSBs included in the first SSB set.

In an embodiment, the second transceiver 910 is further configured to transmit first information, where the first information is used for indicating a quantity of SSB indexes associated with one RO and a quantity of preambles corresponding to each SSB index of each RO.

In an embodiment, the second transceiver 910 is further configured to transmit second information, where the second information includes the Nr, and the Nr is one of 2, 4, or 8.

In an embodiment, the second transceiver 910 may be a transceiver 1030. The second node 900 may further include a processor 1010 and a memory 1020. Details are shown in FIG. 10.

FIG. 10 is a schematic diagram of a structure of a communications apparatus according to an embodiment of the present application. The dashed lines in FIG. 10 indicate that the unit or module is optional. The apparatus 1000 may be configured to implement the method described in the foregoing method embodiments. The apparatus 1000 may be a chip, a user equipment, or a network device.

The apparatus 1000 may include one or more processors 1010. The processor 1010 may allow the apparatus 1000 to implement the method described in the foregoing method embodiments. The processor 1010 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1000 may further include one or more memories 1020. The memory 1020 stores a program. The program may be executed by the processor 1010, to cause the processor 1010 to execute the method described in the foregoing method embodiments. The memory 1020 may be separate from the processor 1010 or may be integrated into the processor 1010.

The apparatus 1000 may further include a transceiver 1030. The processor 1010 may communicate with another device or chip by using the transceiver 1030. For example, the processor 1010 may transmit data to and receive data from another device or chip by using the transceiver 1030.

FIG. 11 is a schematic diagram of a hardware module of a communications device according to an embodiment of the present application. Specifically, FIG. 11 is a block diagram of a first communications device 1150 and a second communications device 1110 communicating with each other in an access network.

The first communications device 1150 includes a controller/processor 1159, a memory 1160, a data source 1167, a transmit processor 1168, a receive processor 1156, a multi-antenna transmit processor 1157, a multi-antenna receive processor 1158, transmitters/receivers 1154, and antennas 1152.

The second communications device 1110 includes a controller/processor 1175, a memory 1176, a data source 1177, a receive processor 1170, a transmit processor 1116, a multi-antenna receive processor 1172, a multi-antenna transmit processor 1171, transmitters/receivers 1118, and antennas 1120.

During transmission from the second communications device 1110 to the first communications device 1150, at the second communications device 1110, an upper layer data packet from a core network or an upper layer data packet from the data source 1177 is provided to the controller/processor 1175. The core network and the data source 1177 represent all protocol layers above an L2 layer. The controller/processor 1175 implements functions of the L2 layer. During transmission from the second communications device 1110 to the first communications device 1150, the controller/processor 1175 provides header compression, encryption, packet segmentation and reordering, multiplexing between a logical channel and a transport channel, and allocation of radio resources of the first communications device 1150 based on various priority measurements. The controller/processor 1175 is further responsible for retransmission of a lost packet, and signalling to the first communications device 1150. The transmit processor 1116 and the multi-antenna transmit processor 1171 implement various signal processing functions of an L1 layer (namely, a physical layer). The transmit processor 1116 implements encoding and interleaving to facilitate forward error correction at the second communications device 1110, and mapping of signal clusters based on various modulation schemes (such as binary phase shift keying, quadrature phase shift keying, M-phase shift keying, and M-quadrature amplitude modulation). The multi-antenna transmit processor 1171 performs digital space precoding, including codebook-based precoding and non-codebook-based precoding, on a coded and modulated symbol, and beamforming processing, to generate one or more spatial streams. The transmit processor 1116 then maps each spatial stream to a subcarrier, multiplexes the mapped spatial stream with a reference signal (for example, a pilot) in time domain and/or frequency domain, and then uses an inverse fast Fourier transform to generate a physical channel that carries a time-domain multi-carrier symbol stream. Subsequently, the multi-antenna transmit processor 1171 performs an operation of analog precoding transmitting/beamforming on the time-domain multi-carrier symbol stream. Each transmitter 1118 converts a baseband multi-carrier symbol stream provided by the multi-antenna transmit processor 1171 into a radio frequency stream, and then provides the radio frequency stream for different antennas 1120.

During transmission from the second communications device 1110 to the first communications device 1150, at the first communications device 1150, each receiver 1154 receives a signal through a corresponding antenna 1152 of the receiver. Each receiver 1154 recovers information modulated onto a radio frequency carrier, converts a radio frequency stream into a baseband multi-carrier symbol stream, and provides the baseband multi-carrier symbol stream for the receive processor 1156. The receive processor 1156 and the multi-antenna receive processor 1158 implement various signal processing functions of the L1 layer. The multi-antenna receive processor 1158 performs an operation of analog precoding receiving/beamforming on the baseband multi-carrier symbol stream from the receiver 1154. The receive processor 1156 converts, from time domain to frequency domain via fast Fourier transform, the baseband multi-carrier symbol stream obtained after the operation of analog precoding receiving/beamforming. In frequency domain, a physical-layer data signal and a reference signal are demultiplexed by the receive processor 1156. The reference signal is used for channel estimation; and the data signal is recovered after multi-antenna detection performed by the multi-antenna receive processor 1158, to obtain any spatial stream that is destined for the first communications device 1150. Symbols on each spatial stream are demodulated and recovered in the receive processor 1156, and a soft decision is generated. The receive processor 1156 then decodes and de-interleaves the soft decision to recover upper layer data and a control signal transmitted by the second communications device 1110 on a physical channel. The upper layer data and the control signal are then provided to the controller/processor 1159. The controller/processor 1159 implements functions of the L2 layer. The controller/processor 1159 may be associated with a memory 1160 that stores program code and data. The memory 1160 may be referred to as a computer-readable medium. During transmission from the second communications device 1110 to the first communications device 1150, the controller/processor 1159 provides demultiplexing between a transport channel and a logical channel, packet reassembly, decryption, header decompression, and control signal processing, to recover an upper layer data packet from the second communications device 1110. The upper layer data packet is then provided to all protocol layers above the L2 layer. Alternatively, various control signals may be provided to the L3 layer for processing by the L3 layer.

During transmission from the first communications device 1150 to the second communications device 1110, at the first communications device 1150, an upper layer data packet is provided to the controller/processor 1159 by using the data source 1167. The data source 1167 represents all protocol layers above the L2 layer. Similar to the transmit function, at the second communications device 1110, described during the transmission from the second communications device 1110 to the first communications device 1150, the controller/processor 1159 implements header compression, encryption, packet segmentation and reordering, and multiplexing between a logical channel and a transport channel, to implement an L2 layer function for a user plane and a control plane. The controller/processor 1159 is further responsible for retransmission of a lost packet, and signalling to the second communications device 1110. The transmit processor 1168 performs modulation mapping and channel coding processing, and the multi-antenna transmit processor 1157 performs digital multi-antenna spatial precoding, including codebook-based precoding and non-codebook-based precoding, and beam forming processing. Then the transmit processor 1168 modulates a generated spatial stream into a multi-carrier/single-carrier symbol stream, and the multi-carrier/single-carrier symbol stream is provided to different antennas 1152 by using the transmitter 1154 after undergoing an analog precoding/beamforming operation in the multi-antenna transmit processor 1157. Each transmitter 1154 first converts a baseband symbol stream provided by the multi-antenna transmit processor 1157 into a radio frequency symbol stream, and then provides the radio frequency symbol stream for the antenna 1152.

During transmission from the first communications device 1150 to the second communications device 1110, a function at the second communications device 1110 is similar to the receive function, at the first communications device 1150, described during the transmission from the second communications device 1110 to the first communications device 1150. Each receiver 1118 receives a radio frequency signal through a corresponding antenna 1120 of the receiver, converts the received radio frequency signal into a baseband signal, and provides the baseband signal for the multi-antenna receive processor 1172 and the receive processor 1170. The receive processor 1170 and the multi-antenna receive processor 1172 jointly implement functions of the L1 layer. The controller/processor 1175 implements functions of the L2 layer. The controller/processor 1175 may be associated with a memory 1176 that stores program code and data. The memory 1176 may be referred to as a computer-readable medium. During transmission from the first communications device 1150 to the second communications device 1110, the controller/processor 1175 provides demultiplexing between a transport channel and a logical channel, packet reassembly, decryption, header decompression, and control signal processing, to recover an upper layer data packet from the first communications device 1150. The upper layer data packet from the controller/processor 1175 may be provided to a core network or all protocol layers above the L2 layer, or various control signals may be provided to the core network or the L3 layer for processing by the L3 layer.

In an embodiment, the first communications device 1150 includes at least one processor and at least one memory. The at least one memory includes computer program code. The at least one memory and the computer program code are configured to be used together with the at least one processor. The first communications device 1150 is at least configured to: receive first signalling, where the first signalling includes a first PRACH mask index; and transmit a first PRACH transmission on a first RO set, where the first RO set includes Nr ROs, the first PRACH transmission includes Nr preamble repetitions, and the Nr ROs in the first RO set are consecutive in time domain. A first SSB index is one of a plurality of SSB indexes. The Nr ROs in the first RO set are associated with the first SSB index. A start RO in the first RO set is related to all of a quantity of the plurality of SSB indexes, the first SSB index, Nr, and the first PRACH mask index. Nr is a positive integer greater than 1.

In an embodiment, the first communications device 1150 includes: a memory for storing a computer-readable instruction program, where the computer-readable instruction program generates actions when being executed by at least one processor, and the actions include: receiving first signalling, where the first signalling includes a first PRACH mask index; and transmitting a first PRACH transmission on a first RO set, where the first RO set includes Nr ROs, the first PRACH transmission includes Nr preamble repetitions, and the Nr ROs in the first RO set are consecutive in time domain. A first SSB index is one of a plurality of SSB indexes. The Nr ROs in the first RO set are associated with the first SSB index. A start RO in the first RO set is related to all of a quantity of the plurality of SSB indexes, the first SSB index, Nr, and the first PRACH mask index. Nr is a positive integer greater than 1.

In an embodiment, the first communications device 1150 corresponds to a first node in the present application.

In an embodiment, the second communications device 1110 corresponds to a second node in the present application.

In an embodiment, the first communications device 1150 is a user equipment, and the user equipment may serve as a relay node.

In an embodiment, the first communications device 1150 is a user equipment supporting V2X, and the user equipment may serve as a relay node.

In an embodiment, the first communications device 1150 is a user equipment supporting D2D, and the user equipment may serve as a relay node.

In an embodiment, the first communications device 1150 is a network-controlled repeater NCR.

In an embodiment, the first communications device 1150 is a relay wireless repeater.

In an embodiment, the first communications device 1150 is a relay.

In an embodiment, the second communications device 1110 is a base station.

In an embodiment, the antenna 1152, the receiver 1154, the multi-antenna receive processor 1158, the receive processor 1156, and the controller/processor 1159 are configured to receive first signalling.

In an embodiment, the antenna 1152, the transmitter 1154, the multi-antenna transmit processor 1157, the transmit processor 1168, and the controller/processor 1159 are configured to transmit a first PRACH transmission on a first RO set.

In an embodiment, the antenna 1120, the transmitter 1118, the multi-antenna transmit processor 1171, the transmit processor 1116, and the controller/processor 1175 are configured to transmit first signalling.

In an embodiment, the antenna 1120, the receiver 1118, the multi-antenna receive processor 1172, the receive processor 1170, and the controller/processor 1175 are configured to receive the first PRACH transmission on the first RO set.

An embodiment of the present application further provides a computer-readable storage medium for storing a program. The computer-readable storage medium may be applied to the terminal or the network device provided in embodiments of the present application, and the program causes a computer to execute the method performed by the terminal or the network device in various embodiments of the present application.

An embodiment of the present application further provides a computer program product. The computer program product includes a program. The computer program product may be applied to the terminal or the network device provided in embodiments of the present application, and the program causes a computer to execute the method performed by the terminal or the network device in various embodiments of the present application.

An embodiment of the present application further provides a computer program. The computer program may be applied to the terminal or the network device provided in embodiments of the present application, and the computer program causes a computer to execute the method executed by the terminal or the network device in various embodiments of the present application.

It should be understood that the terms "system" and "network" in the present application may be used interchangeably. In addition, the terms used in the present application are only used to explain the specific embodiments of the present application, and are not intended to limit the present application. The terms "first", "second", "third", "fourth", and the like in the specification, claims, and drawings of the present application are used to distinguish between different objects, rather than to describe a specific order. In addition, the terms "include" and "have" and any variations thereof are intended to cover a non-exclusive inclusion.

In embodiments of the present application, the "indication" mentioned may be a direct indication or an indirect indication, or indicate an association. For example, if A indicates B, it may mean that A directly indicates B, for example, B can be obtained from A. Alternatively, it may mean that A indirectly indicates B, for example, A indicates C, and B can be obtained from C. Alternatively, it may mean that there is an association relationship between A and B.

In embodiments of the present application, "B corresponding to A" means that B is associated with A, and B may be determined based on A. However, it should be further understood that, determining B based on A does not mean determining B based only on A, but instead, B may be determined based on A and/or other information.

In embodiments of the present application, the term "correspond" may mean that there is a direct or indirect correspondence between the two, or may mean that there is an association relationship between the two, or may mean that there is a relationship such as indicating and being indicated, or configuring and being configured.

In embodiments of the present application, the "predefined" or "preconfigured" may be implemented in a manner in which corresponding code, a table, or other related information that may be used for indication is pre-stored in a device (for example, including a user equipment and a network device). A specific implementation thereof is not limited in the present application. For example, predefined may refer to being defined in a protocol.

In embodiments of the present application, the "protocol" may refer to a standard protocol in the communications field, and may include, for example, an LTE protocol, an NR protocol, and a related protocol applied to a future communications system, which is not limited in the present application.

In embodiments of the present application, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

In embodiments of the present application, sequence numbers of the foregoing processes do not mean execution sequences. The execution sequences of the processes should be determined according to functions and internal logic of the processes, and should not be construed as any limitation on the implementation processes of embodiments of the present application.

In several embodiments provided in the present application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatus or units may be implemented in electronic, mechanical, or other forms.

The units described as separate parts may or may not be physically separate, and parts displayed as units may or may not be physical units, and may be at one location, or may be distributed on a plurality of network elements. Some or all of the units may be selected according to actual requirements to achieve the objective of the solutions of embodiments.

In addition, functional units in embodiments of the present application may be integrated into one processing unit, or each of the units may exist alone physically, or two or more units may be integrated into one unit.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of the present application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state disk, SSD)), or the like.

A person of ordinary skill in the art may understand that all or some of the steps in the foregoing method may be completed by a program to instruct related hardware. The program may be stored in a computer-readable storage medium, such as a read-only memory, a hard disk, or an optical disk. Optionally, all or some of the steps in the foregoing embodiments may alternatively be implemented by using one or more integrated circuits. Correspondingly, each module unit in the foregoing embodiments may be implemented in a form of hardware, or may be implemented in a form of a software function module. The present application is not limited to a combination of any specific form of software and hardware. The first node in the present application includes but is not limited to: a mobile phone, a tablet computer, a notebook computer, a network interface card, a low-power-consumption device, an enhanced machine-type communication (enhanced machine-type communication, eMTC) device, a narrow band internet of things (narrow band internet of things, NB-IoT) device, a vehicle-mounted communications device, an aircraft, an airplane, a drone, a radio-controlled aircraft, and other wireless communications devices. The second node in the present application includes but is not limited to a mobile phone, a tablet computer, a notebook computer, a network interface card, a low-power-consumption device, an eMTC device, an NB-IoT device, a vehicle-mounted communications device, an aircraft, an airplane, a drone, a radio-controlled aircraft, and other wireless communications devices. The user equipment or the UE or the terminal in the present application includes but is not limited to a mobile phone, a tablet computer, a notebook computer, a network interface card, a low-power-consumption device, an eMTC device, an NB-IoT device, a vehicle-mounted communications device, an aircraft, an airplane, a drone, a radio-controlled aircraft, and other wireless communications devices. The base station device or the base station or the network-side device in the present application includes but is not limited to a macro cellular base station, a micro cellular base station, a home base station, a relay base station, an eNB, a gNB, a TRP, a global navigation satellite system (global navigation satellite system, GNSS), a relay satellite, a satellite base station, an air base station, and other wireless communications devices.

The foregoing descriptions are merely specific implementations of the present application, but the protection scope of the present application is not limited thereto. Any variation or replacement readily figured out by a person skilled in the art within the technical scope disclosed in the present application shall fall within the protection scope of the present application. Therefore, the protection scope of the present application shall be subject to the protection scope of the claims.

## Claims

1. A method for a first node used for wireless communication, comprising:
receiving first signalling, wherein the first signalling comprises a first PRACH mask index; and
transmitting a first PRACH transmission on a first RO set, wherein
the first RO set comprises Nr ROs, the first PRACH transmission comprises Nr preamble repetitions, the Nr ROs in the first RO set are consecutive in time domain, a first SSB index is one of a plurality of SSB indexes, the Nr ROs in the first RO set are associated with the first SSB index, a start RO in the first RO set is related to all of a quantity of the plurality of SSB indexes, the first SSB index, Nr, and the first PRACH mask index, and Nr is a positive integer greater than 1.

2. The method according to claim 1, wherein the method further comprises:
mapping the plurality of SSB indexes to a plurality of ROs according to a first mapping order, wherein
the plurality of SSB indexes are in a one-to-one correspondence with a plurality of SSBs comprised in a first SSB set; and the plurality of ROs belong to a first period, and the plurality of ROs comprise the Nr ROs in the first RO set.

3. The method according to claim 1 or 2, wherein an index of the start RO in the first RO set is related to all of the quantity of the plurality of SSB indexes, the first SSB index, Nr, and the first PRACH mask index.

4. The method according to any one of claims 1 to 3, wherein an index of the start RO in the first RO set is linearly correlated with a product of the quantity of the plurality of SSB indexes and the Nr.

5. The method according to claim 4, wherein an index of the start RO in the first RO set is equal to the first SSB index + (the first PRACH mask index - 1) × the quantity of the plurality of SSB indexes × Nr × first quantity of frequency domain ROs + 1.

6. The method according to any one of claims 3 to 5, wherein a first period comprises a plurality of ROs, the plurality of ROs comprised within the first period comprise the Nr ROs in the first RO set, and the index of the start RO in the first RO set is an index of the start RO in the plurality of ROs comprised within the first period.

7. The method according to claim 1 or 2, wherein a first period comprises a plurality of RO sets, and each RO set in the plurality of RO sets comprises Nr ROs; and an index of the first RO set in the plurality of RO sets is related to all of the quantity of the plurality of SSB indexes, the first SSB index, and the Nr, and the first PRACH mask index indicates the index of the first RO set in the plurality of RO sets.

8. The method according to any one of claims 1 to 7, wherein the method further comprises:
receiving a first SSB, wherein the first SSB is one of a plurality of SSBs comprised in a first SSB set, wherein
a measurement value of the first SSB is a maximum value among a plurality of measurement values of the plurality of respective SSBs comprised in the first SSB set.

9. The method according to any one of claims 1 to 8, wherein the method further comprises:
receiving first information, wherein
the first information is used for indicating a quantity of SSB indexes associated with one RO and a quantity of preambles corresponding to each SSB index of each RO.

10. The method according to any one of claims 1 to 9, wherein the method further comprises:
receiving second information, wherein
the second information comprises the Nr, and the Nr is one of 2, 4, or 8.

11. A method for a second node used for wireless communication, comprising:
transmitting first signalling, wherein the first signalling comprises a first PRACH mask index; and
receiving a first PRACH transmission on a first RO set, wherein
the first RO set comprises Nr ROs, the first PRACH transmission comprises Nr preamble repetitions, the Nr ROs in the first RO set are consecutive in time domain, a first SSB index is one of a plurality of SSB indexes, the Nr ROs in the first RO set are associated with the first SSB index, a start RO in the first RO set is related to all of a quantity of the plurality of SSB indexes, the first SSB index, Nr, and the first PRACH mask index, and Nr is a positive integer greater than 1.

12. The method according to claim 11, wherein a first mapping order is used for mapping the plurality of SSB indexes to a plurality of ROs, and the plurality of SSB indexes are in a one-to-one correspondence with a plurality of SSBs comprised in a first SSB set; and the plurality of ROs belong to a first period, and the plurality of ROs comprise the Nr ROs in the first RO set.

13. The method according to claim 11 or 12, wherein an index of the start RO in the first RO set is related to all of the quantity of the plurality of SSB indexes, the first SSB index, Nr, and the first PRACH mask index.

14. The method according to any one of claims 11 to 13, wherein an index of the start RO in the first RO set is linearly correlated with a product of the quantity of the plurality of SSB indexes and the Nr.

15. The method according to claim 14, wherein an index of the start RO in the first RO set is equal to the first SSB index + (the first PRACH mask index - 1) × the quantity of the plurality of SSB indexes × Nr × first quantity of frequency domain ROs + 1.

16. The method according to any one of claims 13 to 15, wherein a first period comprises a plurality of ROs, the plurality of ROs comprised within the first period comprise the Nr ROs in the first RO set, and the index of the start RO in the first RO set is an index of the start RO in the plurality of ROs comprised within the first period.

17. The method according to claim 11 or 12, wherein a first period comprises a plurality of RO sets, and each RO set in the plurality of RO sets comprises Nr ROs; and an index of the first RO set in the plurality of RO sets is related to all of the quantity of the plurality of SSB indexes, the first SSB index, and the Nr, and the first PRACH mask index indicates the index of the first RO set in the plurality of RO sets.

18. The method according to any one of claims 11 to 17, wherein the method further comprises:
transmitting a first SSB, wherein the first SSB is one of a plurality of SSBs comprised in a first SSB set, wherein
a measurement value of the first SSB is a maximum value among a plurality of measurement values respectively corresponding to the plurality of SSBs comprised in the first SSB set.

19. The method according to any one of claims 11 to 18, wherein the method further comprises:
transmitting first information, wherein
the first information is used for indicating a quantity of SSB indexes associated with one RO and a quantity of preambles corresponding to each SSB index of each RO.

20. The method according to any one of claims 11 to 19, wherein the method further comprises:
transmitting second information, wherein
the second information comprises the Nr, and the Nr is one of 2, 4, or 8.

21. A first node used for wireless communication, comprising:
a first transceiver, receiving first signalling, wherein the first signalling comprises a first PRACH mask index, and
the first transceiver is further configured to transmit a first PRACH transmission on a first RO set, wherein
the first RO set comprises Nr ROs, the first PRACH transmission comprises Nr preamble repetitions, the Nr ROs in the first RO set are consecutive in time domain, a first SSB index is one of a plurality of SSB indexes, the Nr ROs in the first RO set are associated with the first SSB index, a start RO in the first RO set is related to all of a quantity of the plurality of SSB indexes, the first SSB index, Nr, and the first PRACH mask index, and Nr is a positive integer greater than 1.

22. The first node according to claim 21, wherein the first transceiver is further configured to map the plurality of SSB indexes to a plurality of ROs according to a first mapping order, and the plurality of SSB indexes are in a one-to-one correspondence with a plurality of SSBs comprised in a first SSB set; and the plurality of ROs belong to a first period, and the plurality of ROs comprise the Nr ROs in the first RO set.

23. The first node according to claim 21 or 22, wherein an index of the start RO in the first RO set is related to all of the quantity of the plurality of SSB indexes, the first SSB index, Nr, and the first PRACH mask index.

24. The first node according to any one of claims 21 to 23, wherein an index of the start RO in the first RO set is linearly correlated with a product of the quantity of the plurality of SSB indexes and the Nr.

25. The first node according to claim 24, wherein an index of the start RO in the first RO set is equal to the first SSB index + (the first PRACH mask index - 1) × the quantity of the plurality of SSB indexes × Nr × first quantity of frequency domain ROs + 1.

26. The first node according to any one of claims 23 to 25, wherein a first period comprises a plurality of ROs, the plurality of ROs comprised within the first period comprise the Nr ROs in the first RO set, and the index of the start RO in the first RO set is an index of the start RO in the plurality of ROs comprised within the first period.

27. The first node according to claim 21 or 22, wherein a first period comprises a plurality of RO sets, and each RO set in the plurality of RO sets comprises Nr ROs; and an index of the first RO set in the plurality of RO sets is related to all of the quantity of the plurality of SSB indexes, the first SSB index, and the Nr, and the first PRACH mask index indicates the index of the first RO set in the plurality of RO sets.

28. The first node according to any one of claims 21 to 27, wherein the first transceiver is further configured to receive a first SSB, the first SSB is one of a plurality of SSBs comprised in a first SSB set, and a measurement value of the first SSB is a maximum value among a plurality of measurement values respectively corresponding to the plurality of SSBs comprised in the first SSB set.

29. The first node according to any one of claims 21 to 28, wherein the first transceiver is further configured to receive first information, wherein the first information is used for indicating a quantity of SSB indexes associated with one RO and a quantity of preambles corresponding to each SSB index of each RO.

30. The first node according to any one of claims 21 to 29, wherein the first transceiver is further configured to receive second information, wherein the second information comprises the Nr, and the Nr is one of 2, 4, or 8.

31. A second node used for wireless communication, comprising:
a second transceiver, transmitting first signalling, wherein the first signalling comprises a first PRACH mask index, and
the second transceiver is further configured to receive a first PRACH transmission on a first RO set, wherein
the first RO set comprises Nr ROs, the first PRACH transmission comprises Nr preamble repetitions, the Nr ROs in the first RO set are consecutive in time domain, a first SSB index is one of a plurality of SSB indexes, the Nr ROs in the first RO set are associated with the first SSB index, a start RO in the first RO set is related to all of a quantity of the plurality of SSB indexes, the first SSB index, Nr, and the first PRACH mask index, and Nr is a positive integer greater than 1.

32. The second node according to claim 31, wherein a first mapping order is used for mapping the plurality of SSB indexes to a plurality of ROs, and the plurality of SSB indexes are in a one-to-one correspondence with a plurality of SSBs comprised in a first SSB set; and the plurality of ROs belong to a first period, and the plurality of ROs comprise the Nr ROs in the first RO set.

33. The second node according to claim 31 or 32, wherein an index of the start RO in the first RO set is related to all of the quantity of the plurality of SSB indexes, the first SSB index, Nr, and the first PRACH mask index.

34. The second node according to any one of claims 31 to 33, wherein an index of the start RO in the first RO set is linearly correlated with a product of the quantity of the plurality of SSB indexes and the Nr.

35. The second node according to claim 34, wherein an index of the start RO in the first RO set is equal to the first SSB index + (the first PRACH mask index - 1) × the quantity of the plurality of SSB indexes × Nr ×first quantity of frequency domain ROs + 1.

36. The second node according to any one of claims 33 to 35, wherein a first period comprises a plurality of ROs, the plurality of ROs comprised within the first period comprise the Nr ROs in the first RO set, and the index of the start RO in the first RO set is an index of the start RO in the plurality of ROs comprised within the first period.

37. The second node according to claim 31 or 32, wherein a first period comprises a plurality of RO sets, and each RO set in the plurality of RO sets comprises Nr ROs; and an index of the first RO set in the plurality of RO sets is related to all of the quantity of the plurality of SSB indexes, the first SSB index, and the Nr, and the first PRACH mask index indicates the index of the first RO set in the plurality of RO sets.

38. The second node according to any one of claims 31 to 37, wherein the second transceiver is further configured to transmit a first SSB, the first SSB is one of a plurality of SSBs comprised in a first SSB set, and a measurement value of the first SSB is a maximum value among a plurality of measurement values respectively corresponding to the plurality of SSBs comprised in the first SSB set.

39. The second node according to any one of claims 31 to 38, wherein the second transceiver is further configured to transmit first information, wherein the first information is used for indicating a quantity of SSB indexes associated with one RO and a quantity of preambles corresponding to each SSB index of each RO.

40. The second node according to any one of claims 31 to 39, wherein the second transceiver is further configured to transmit second information, wherein the second information comprises the Nr, and the Nr is one of 2, 4, or 8.

41. A node used for wireless communication, comprising a transceiver, a memory, and a processor, wherein the memory is configured to store a program, and the processor is configured to call the program in the memory, and control the transceiver to receive or transmit a signal, so that the node performs the method according to any one of claims 1 to 10 or claims 11 to 20.

42. An apparatus, comprising a processor, calling a program from a memory to cause the apparatus to perform the method according to any one of claims 1 to 10 or claims 11 to 20.

43. A chip, comprising a processor, calling a program from a memory to cause a device installed with the chip to perform the method according to any one of claims 1 to 10 or claims 11 to 20.

44. A computer-readable storage medium, wherein the computer-readable storage medium stores a program, and the program causes a computer to perform the method according to any one of claims 1 to 10 or claims 11 to 20.

45. A computer program product, comprising a program that causes a computer to perform the method according to any one of claims 1 to 10 or claims 11 to 20.

46. A computer program, wherein the computer program causes a computer to perform the method according to any one of claims 1 to 10 or claims 11 to 20.
